# EUROPEAN PATENT SPECIFICATION

(11) **EP 4 355 699 B1**
(45) Date of publication and mention of the grant of the patent: **29.10.2025**
(21) Application number: 22733152.7
(22) Date of filing: 15.06.2022
(51) Int. Cl.: C03B 33/027, C03B 33/037

(54) **INSTALLATION FOR PRODUCING AT LEAST ONE USEFUL PART FROM A GLASS PANE**
ANLAGE ZUR HERSTELLUNG MINDESTENS EINES NUTZTEILS AUS EINER GLASSCHEIBE
INSTALLATION DE PRODUCTION D?AU MOINS UNE PIÈCE UTILE À PARTIR D?UNE VITRE

(30) Priority: 17.06.2021 CH 7062021
(43) Date of publication of application: 24.04.2024
(73) Proprietor: Glaston Switzerland AG, 4922 Bützberg (CH)
(72) Inventor: LOPPACHER, Matthias, 4054 Basel (CH); JUTZI, Fabio, 3362 Niederönz (CH); LEYENDECKER, Jörg, 4900 Langenthal (CH); HOFFMANN, Andre, 4923 Wynau (CH)
(74) Representative: AMMANN PATENTANWÄLTE AG
(86) International application number: PCT/EP2022/066434
(87) International publication number: WO 2022/263579

(56) References cited:
- EP-A1- 2 246 309

## Description

The present invention relates to an installation for producing at least one useful part from a glass pane by means of processing steps, which comprise cutting, breaking and grinding.

Such an installation is known, for example, from patent application EP 1 647 534 A1 by the same applicant. The constant optimization and monitoring of the installation, for example with regard to the best possible product quality (e.g. glass dimensions, ground profile shape and surface), long tool life (e.g. grinding wheels), short cycle times or reduced energy consumption is almost exclusively the responsibility of the operating personnel. Due to the great complexity of the technical relationships and interactions, the potential of the installation cannot be fully exploited by the operating personnel. The quality of the glass as the final product can be determined during ongoing production only after it has gone through the process chain by means of "human" assessment and measurement. Conclusions about the causes of observed faults are only possible with a lot of experience or not possible at all.

US 2006/0232403 A1 discloses an installation for producing a glass ribbon from a glass melt, which glass ribbon is continuously divided into glass panes by means of scoring and breaking. Sensors are used to detect sound during the scoring and breaking process. The respective glass pane represents a primitive, which must be further processed by means of dividing and grinding in order to obtain an end product with the desired quality. Nothing is disclosed in this US application regarding these further processing steps.

Furthermore, EP 2 246 309 A1 concerns a glass-plate working machine which is arranged such that a cutting head for forming a cut line on the glass plate and a grinding head for grinding an edge of the glass plate subjected to bend-breaking along the cut line are recontrolled about their axes perpendicular to the surface of the glass plate, to ensure that the cutting direction of a cutter wheel is constantly oriented in the tangential direction to the cut line, and such that the press contacting direction of a grinding wheel is kept in the normal direction to an edge of the glass plate.

Proceeding from this, it is an object of the present invention to specify an installation for producing at least one useful part from a glass pane having improved operation and a method therefor.

This object is achieved by an installation according to claim 1 and a method according to the independent method claim. Preferred embodiments of the installation and the method are specified in the further claims.

By detecting a first measured variable, which can be detected during the execution of one of the processing steps, and by including at least one further measured variable, the control device can influence the ongoing processing, a subsequent processing step and/or the processing of a subsequent glass pane and/or useful part by means of a corresponding evaluation. A processing step is a working step, i.e. a step in which the glass pane or the useful part is worked. Working includes cutting, breaking and grinding and optionally one or more further working steps such as drilling. Other measured variables can be detected, for example, during the execution of the same or another processing step in which the first measured variable can be detected, and/or specify at least one process parameter for a processing step and/or can be detected outside a processing step, i.e., before and/or after a processing step. In this way, measured variables from different process sequences can preferably be brought into relation with one another.

The installation and/or the method preferably have one or more of the following features:
- The glass pane and/or useful part is/are processed in a substantially horizontal position, in particular in at least one of the processing steps comprising cutting, breaking, grinding and, if provided, drilling.
- The useful part that can be produced can have any contour. The contour can thus optionally be rectangular or non-rectangular. A rectangular useful part therefore forms a quadrilateral having right-angled corners. In the case of a non-rectangular useful part, corners and edges of any shape can be provided; in particular, the corners can be rounded.
- The control device is configured in such a way that, using the cutting device, the glass pane can be provided with at least one auxiliary cutting line in addition to a cutting line that is intended to produce the contour of the useful part, along which auxiliary cutting line the edge region of the glass pane that does not belong to the useful part is to be divided.
- The installation is configured to form a control loop during cutting, breaking, grinding and/or, if provided, drilling. In particular, the measurement signals supplied by the measuring devices can be continuously evaluated by the control device in order to repeatedly generate correction signals with which the device active in the corresponding processing step can be controlled in an adapted manner.
- The at least one cutting tool of the cutting device may comprise a cutting wheel which is tiltable with respect to the vertical axis.
- The cutting device may comprise a linear drive for moving the at least one cutting tool towards to and away from a glass pane.
- The breaking device may comprise a linear drive for moving the at least one breaking tool towards to and away from a glass pane.
- The measuring device for generating measurement signals may comprise at least one camera for imaging at least part of the glass pane and/or of the useful part, in particular the edge of the glass pane and/or of the useful part. The measuring device is e.g. applicable for generating measurement signals, which comprise a measured variable, which is detectable outside a processing step and which defines a state parameter of at least part of the glass pane. E.g. the measured variable may be based on detecting the edge of the useful part being a part of the glass pane, wherein said detection may be after cutting and breaking the glass pane and before grinding and/or after grinding of the edge of the useful part. The measuring device may be used to perform among others a quality check of the useful part produced and/or to feed back the outcome in order to adapt the further processing of the useful part and/or the processing of a subsequent glass pane and/or of a useful part. In a preferred embodiment, the measuring device comprises two or more cameras, which may be arranged above the glass pane and/or the useful part.

The invention is explained in the following by means of exemplary embodiments with reference to figures, in which:
Fig. 1 is a plan view of an embodiment of the installation according to the invention,
Fig. 2 is a side view of the installation according to Fig. 1,
Fig. 3 is a perspective view of the installation according to Fig. 1,
Fig. 4 is a perspective view of a machine of the installation according to Fig. 1 for cutting and breaking,
Fig. 5 is a detailed view of the machine according to Fig. 4 during cutting in a sectional side view,
Fig. 6 shows an example of a cut glass pane,
Fig. 7 is the detailed view according to Fig. 5, but during breaking,
Fig. 8 shows the useful part, which has been broken out in the example according to Fig. 6,
Fig. 9 is a perspective view of a machine of the installation according to Fig. 1 for grinding,
Fig. 10 is a detailed view of the machine according to Fig. 9 during grinding in a sectional side view,
Fig. 11 is a sectional detail view of a useful part from the side,
Fig. 12 is the detailed view of the useful part according to Fig. 11 after grinding,
Fig. 13 schematically shows the process flow of processing and the interaction with the control device,
Fig. 14 schematically shows a tiltable cutting wheel,
Fig. 15 is a sectioned side view of a drill,
Fig. 16 schematically shows an example of the kinematics for moving two tools with the same drive,
Fig. 17 schematically shows a side view of a measuring device for sensing a glass edge,
Fig. 18 the measuring device of Fig. 17 in a top view, wherein the glass edge is in a first position, and
Fig. 19 the measuring device of Fig. 17 in a top view, wherein the glass edge is in a second position.

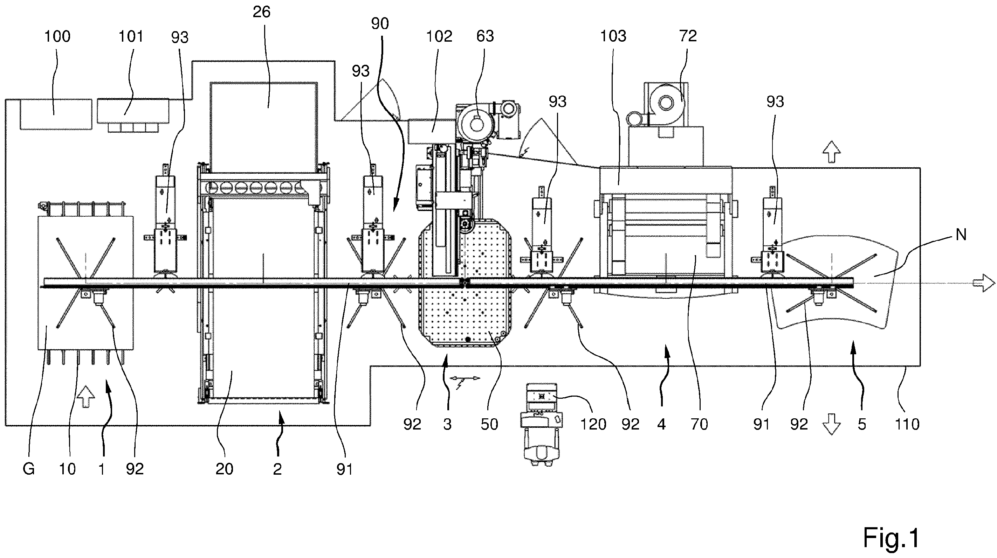

Fig. 1-3 show an example of an installation for processing a glass pane G at various stations 1-5 in order to produce a useful part N.

Viewed in the direction of processing, the installation comprises the following successive stations:
- a first station 1 for transporting a glass pane G to be processed, which in this case comprises a rack 10,
- a second station 2 for cutting and breaking the glass pane G, which in this case comprises a machine 20 serving both as a cutting device and a breaking device,
- a third station 3 for grinding the edge of the useful part broken out of the glass pane G, which in this case comprises a machine 50 having a grinding device,
- a fourth station 4 for drilling at least one hole in the ground useful part, which in this case comprises a machine 70 having a drilling device, and
- a fifth station 5, from which the finished useful part N can be transported away.

Depending on the design of the installation, one or more of the stations 1-5 can be integrated in a single machine. Individual stations 1-5 can also be provided in plurality.

A transfer device 90 is used to transfer the glass pane G or the useful part N between the individual stations 1-5, which transfer device in this case has longitudinal supports 91 and receiving devices 92 movably arranged thereon. The longitudinal supports 91 are held on support devices 93 resting on the ground. A receiving device 92 has a vertically movable rack having, for example, one or more suction cups to be able to hold the glass pane G or the useful part N. The rack can also be pivotable about one or more axes.

In Fig. 1-3, a receiving device 92 is provided in each case that can be moved back and forth between two adjacent stations 1-5. However, the number of receiving devices 92 can also be different than shown here and can be one, two, three or more.

In Fig. 1-3, a control device 100-103 is indicated that has a central controller 100 and associated individual controllers 101, 102, 103 for controlling the respective machines 20, 50, 70, a barrier 110 that encloses the installation, for example in the form of a security fence to prevent unintentional access by a person during processing, and an operator terminal 120 that is located outside the barrier and is connected to the central controller 100.

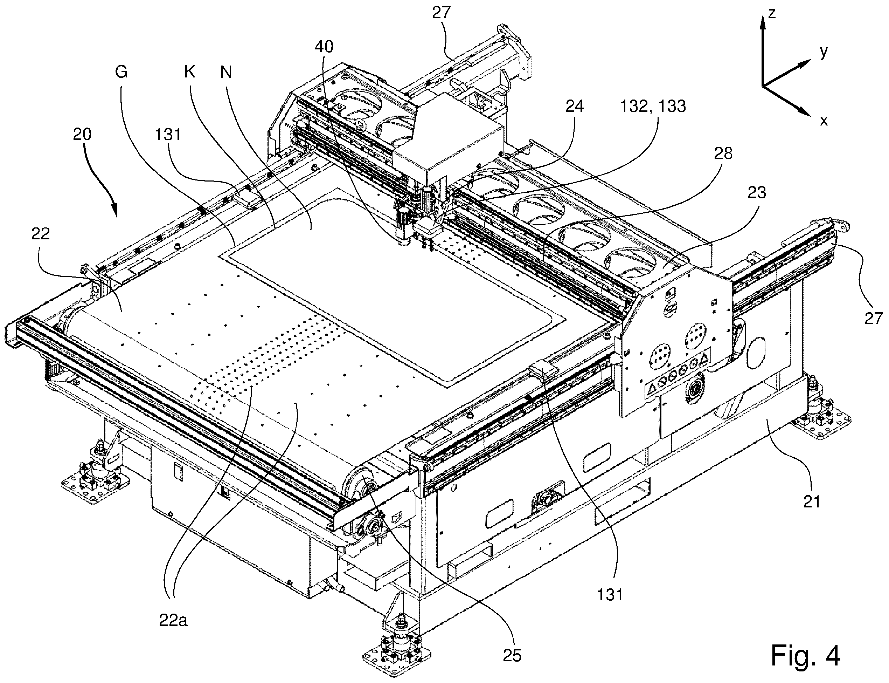

Fig. 4 shows in more detail the machine 20 for cutting and breaking the glass pane G. Said machine has a frame 21 on which an endless conveyor belt 22 and a bridge 23 that can be displaced in the Y direction are arranged, on which bridge a carriage 24 having a cutting tool 30 and a breaking tool 40 is arranged that can be displaced in the X direction.

The conveyor belt 22 is placed around deflection rollers 25, at least one of which can be driven. On the one hand, said conveyor belt serves as a support surface for the glass pane G during processing thereof, during which the conveyor belt 22 is at rest. Said conveyor belt is provided with holes 22a through which air can be sucked out by means of a vacuum pump and an underpressure can thus be generated, which causes the glass pane G to be processed to be held in place. On the other hand, the conveyor belt 22 can be moved in the Y direction to be able to transport the broken-off glass shards to an adjoining collection basin 26, for example a pit in the floor or a container (see Fig. 1), after the useful part N has been transported away.

On the frame 21, longitudinal rails 27 are arranged on two longitudinal sides, along which longitudinal rails the bridge 23 can be moved, for example by means of linear drives. The bridge 23 has a transverse rail 28 on which the carriage 24 is arranged such that it can be moved, for example by means of a linear drive.

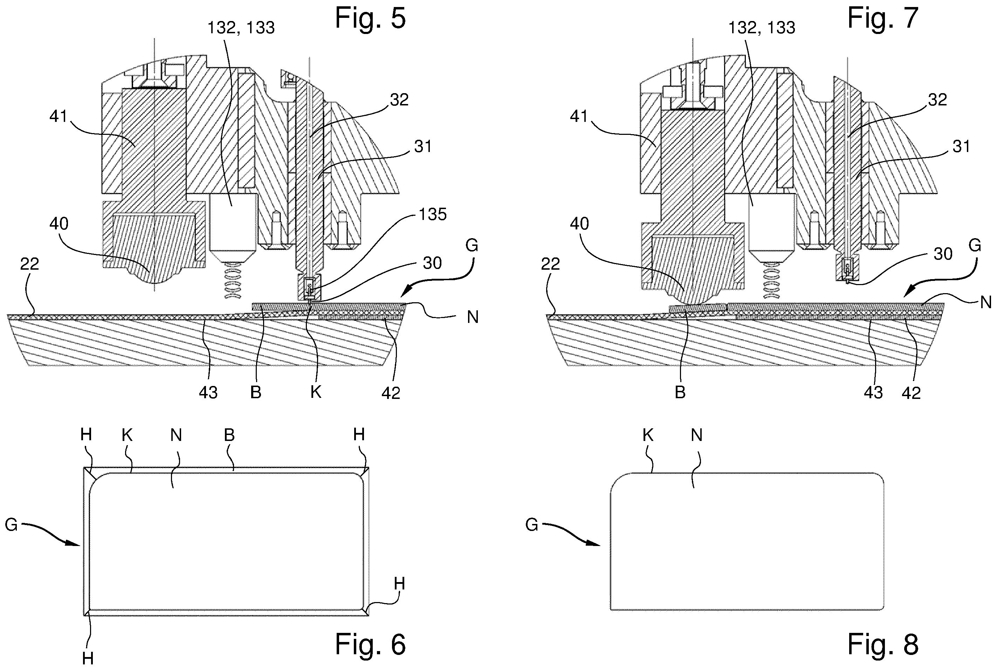

The cutting tool 30 and breaking tool 40 arranged on carriage 24 can be seen in more detail in Fig. 5 and 7. The cutting tool 30 is designed as a cutting wheel that is held in a cutting holder 41 that can be rotated about its longitudinal axis as well as raised and lowered. These movements can be controlled by providing appropriate drives. It is also conceivable to provide a tilting mechanism by means of which the angle between the cutting wheel and the glass surface can be adjusted when the contour to be cut is followed. The cutting holder 31 has a feed channel 32 through which cutting oil can be fed to the cutting tool 30.

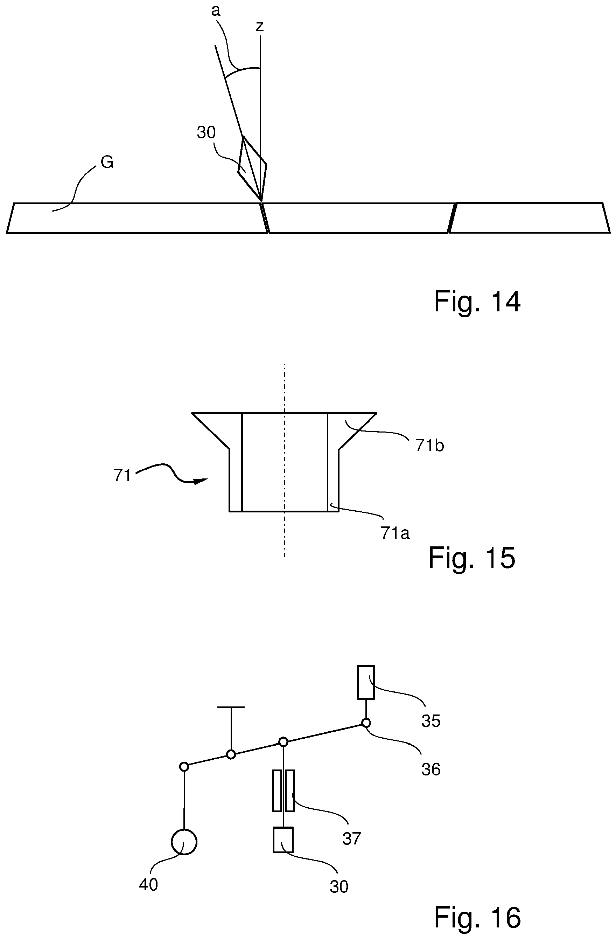

Fig. 14 shows schematically a tiltable cutting wheel of the cutting tool 30 which is tilted from the vertical direction Z by an angle a.

During the cutting process (also called "scoring"), as shown in Fig. 5, the cutting tool 30 is placed onto the glass pane G and moved in such a way that said glass pane is provided with at least one scoring line, which is to result in the desired contour K of the useful part N. The cutting process is supported by adding cutting oil to the cutting tool 30. In order to make it easier to later break off the edge region B (also called "border"), said edge region can also be provided with auxiliary scoring lines H. The cutting thus provides the glass pane G with one or more score lines along which stress is introduced into the glass.

A tiltable cutting wheel as mentioned above may be beneficial for producing a useful part N which has at least one internal opening. Such an opening is defined by a contour situated within the useful part N. By tilting the cutting wheel a scoring line can be provided which, after breaking, leads to a broken edge, which is outwardly inclined so that the portion broken out can be lifted away from the useful part N, or which is inwardly inclined so that the useful part can be lifted away from the portion broken out. Thus, it is possible to provide a useful part, which has one or more openings inside the useful part, in particular a useful part being of a ring type, whose outer outline and inner outline may be round, rectangular or a combination of curved and straight portions.

Optionally, an ultrasonic actuator can be provided on which the cutting tool 30 is mounted and which leads to a greater scratch depth and allows greater speeds when the scoring line is produced. Furthermore, conclusions can be drawn about the scoring process through the interaction of the glass pane G and/or the scratching process via a change in the ultrasonic vibration (e.g. amplitude, phase and/or frequency).

As an alternative or in addition to a cutting wheel, the cutting device can have a laser for generating a laser beam as a cutting tool. To cut the glass pane G, holes can be drilled along the cutting lines, for example, using the laser.

Fig. 6 shows an example of a glass pane G that is provided with a scoring line and auxiliary scoring lines H along the contour K.

As Fig. 5 and Fig. 7 also show, the breaking tool 40 is held in a breaking holder 41 that can be raised and lowered by means of a drive. A breaking body is provided as the breaking tool 40, which breaking body is in this case designed as a breaking ball that is mounted on the breaking holder 41 such that it can rotate in all directions.

It is also conceivable to provide other shapes for the breaking body, for example in the form of a roller. The breaking tool 40 can also be designed as a ram that can be tilted such that the angle between the ram and the surface of the glass pane G can be adjusted. Thus, the ram can also exert a force on glass pane G that does not necessarily act perpendicular to the glass surface. The angle can then, for example, be controlled specifically in the breaking direction, and/or if the breaking does not run in the optimal direction, this can be corrected and optimized by means of the orientation of the ram and/or the size by which the angle deviates from the vertical, in particular in a dynamic manner during breaking along the shape to produce the useful part. It is also conceivable to provide an ultrasonic actuator on which the breaking tool 40 is mounted. The part of the breaking tool 40 with which the glass pane G is contacted can be made of various materials such as metal, plastic, rubber having a certain hardness, etc.

During the breaking process, as shown in Fig. 7, the breaking tool 40 is lowered, such that a moment is applied to the edge region B of the glass pane G. The breaking tool 40 can be lowered onto the edge region B at different points and/or moved along a certain distance along the edge region B after being lowered.

A stationary surface 42, which is arranged below the conveyor belt 22 and rests on a support surface 43, is used as a mating surface in this case. The stationary surface 42 is designed, for example, as a template whose shape is adapted to the contour K of the useful part N and can be replaced if necessary. The template 42 can also already be attached during the cutting process, see Fig. 5.

It is also conceivable to provide at least one movable surface as a mating surface, which movable surface supports the useful part N from below during breaking. For example, at least one lower breaking body can be provided that is arranged in such a way that it can be moved in a radial direction on a table that can be rotated about a center of rotation. As a result, the lower breaking body can be moved in the plane and positioned below the conveyor belt 22 in accordance with the respective position of the breaking body 40 in order to support the glass pane G in such a way that, as mentioned above, a moment can be exerted on the edge region B.

However, the breaking body below the conveyor belt 22 does not necessarily have to be present. For example, a hard or soft base can be provided.

The breaking body 40 can be designed in such a way that it contacts the glass pane G not only at one point, but along a line and/or plane. To be able to align this linear or planar contact surface in a targeted manner during the breaking process, the breaking body can be configured to be tiltable about one or more axes.

The breaking tool 40 need not necessarily have a breaking body or other mechanical object. A device for heating and/or cooling the glass pane G can also serve as a breaking tool. For example, the device can be used to produce at least one structure as a breaking tool, which structure is liquid, gaseous and/or in the form of light. Particular embodiments of the device include the application of a cooling spray, a CO₂- and/or a N₂-laser. The device may be configured such that it serves as a cutting tool 30 and a breaking tool 40.

Fig. 8 shows an example of the useful part N broken out of the glass pane G according to Fig. 6.

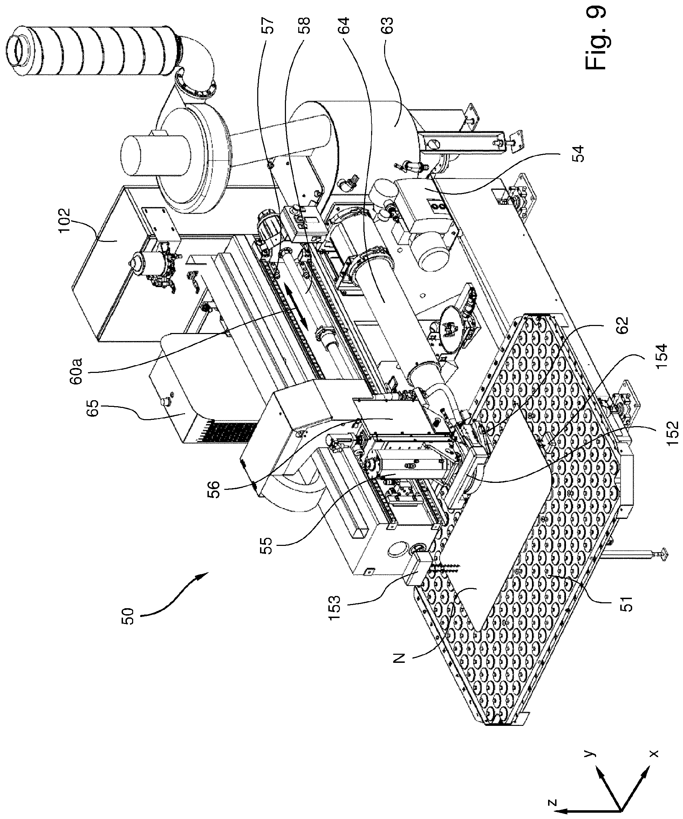

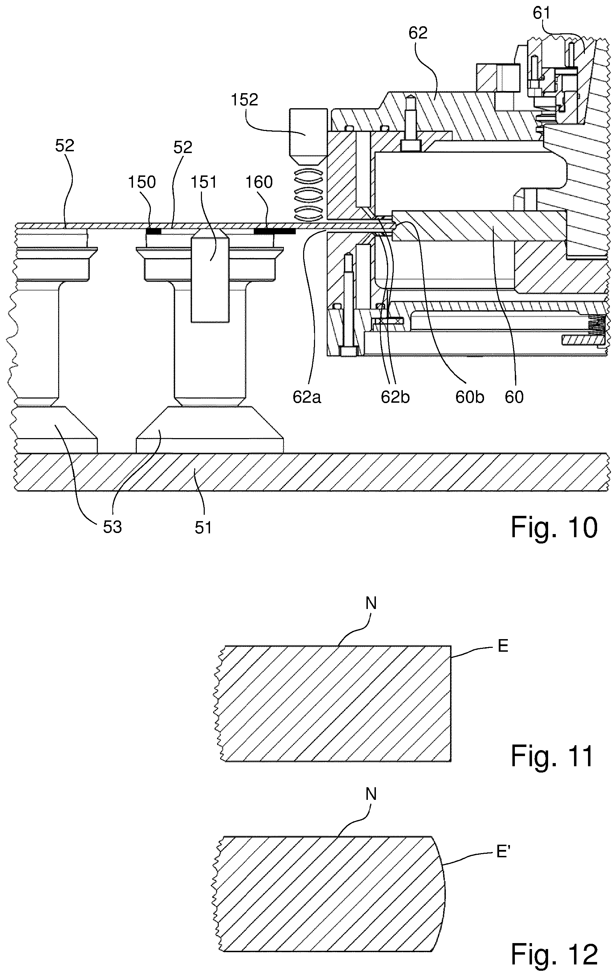

The edge of the useful part N, which is the circumferential outer region between the upper side and underside of the useful part N, is ground at the subsequent station. Fig. 9 and 10 show in more detail the machine 50 for this purpose. Said machine comprises a grinding table 51, which can in this case be rotated about a center of rotation, and the grinding tool 60, which can be moved back and forth along a linear axis, in this case the Y axis, as indicated by the double arrow 60a. The feed of the grinding tool 60 takes place, for example, in a path- and/or force-controlled manner. The grinding table 51 comprises a support 52 that is formed by one or more suction cups 53 and on which the broken-out glass pane N rests during processing and is held in place by means of the suction cup(s) 53. For this purpose, an underpressure can be generated by means of a vacuum pump 54.

The machine also comprises an electric motor 55 for driving the grinding tool 60. The electric motor 55 and the grinding tool 60 are arranged on a carriage 56 that can be moved along a rail 57 as a guide by means of a drive 58. In this case, the electric motor 55 is designed, for example, as a spindle motor in order to set the grinding tool 60 in rotation. Said grinding tool is designed, for example, as a one-piece or multi-piece grinding wheel. The shape of the grinding wheel 60 is chosen in such a way that the edge of the glass pane N has the desired profile as a result of the grinding. In Fig. 10, the grinding wheel 60 has a profile having a single groove 60b. The grinding wheel 60 can also be designed to have two or more profiles that are the same or different and can optionally be used by moving the grinding wheel 60 vertically, such that the desired profile is at the level of the edge to be machined.

The grinding tool 60 is held on a grinding spindle 61 and surrounded by a housing 62 that serves as a splash guard for the coolant supplied, for example cooling water. The housing 62 has a continuous slot 62a on the side, through which the edge region of the useful part N protrudes into the interior of the housing and can thus be machined by the grinding tool 60. The housing 62 also has internal channels 62b through which coolant can be supplied to the grinding tool 60. The coolant can be collected at the bottom of the housing 62 and sucked off by means of a suction device that has a suction tube 64 and a cyclone separator 63 in this case.

A cooling device 65 can be provided for cooling the electric motor 55 and/or the grinding spindle 61.

In the machine 50 shown here, the spatial position of both the support 52 and the grinding tool 60 can be changed. In order to achieve a relative movement between the useful part N and the grinding tool 60, the following embodiments are also conceivable:
- The support 52 is stationary and the grinding tool 60 is arranged such that it can be moved around the edge of the useful part N.
- The grinding tool 60 is stationary and the support 52 is movable, such that the edge of the useful part N can be moved past the grinding tool 60.

In the case of the machine 50, more than one grinding tool 60 can also be provided to be able to grind the useful part N at a plurality of locations at the same time and/or to be able to grind a plurality of useful parts N at the same time.

Fig. 11 shows an example of the edge region of a broken glass pane edge E. Said glass pane edge is only in the ideal case right-angled and smooth, as shown here. As a rule, the edge E is not necessarily right-angled and there may be breakouts, in particular at corners and at the transition to the upper side or underside of the useful part N.

Fig. 12 shows the edge region of the glass pane edge E' after grinding. A ground C-profile is shown here as an example. Any edge profile to be ground is conceivable: rectangular, having chamfers and/or miters, rounded edges, stepped edges, etc.

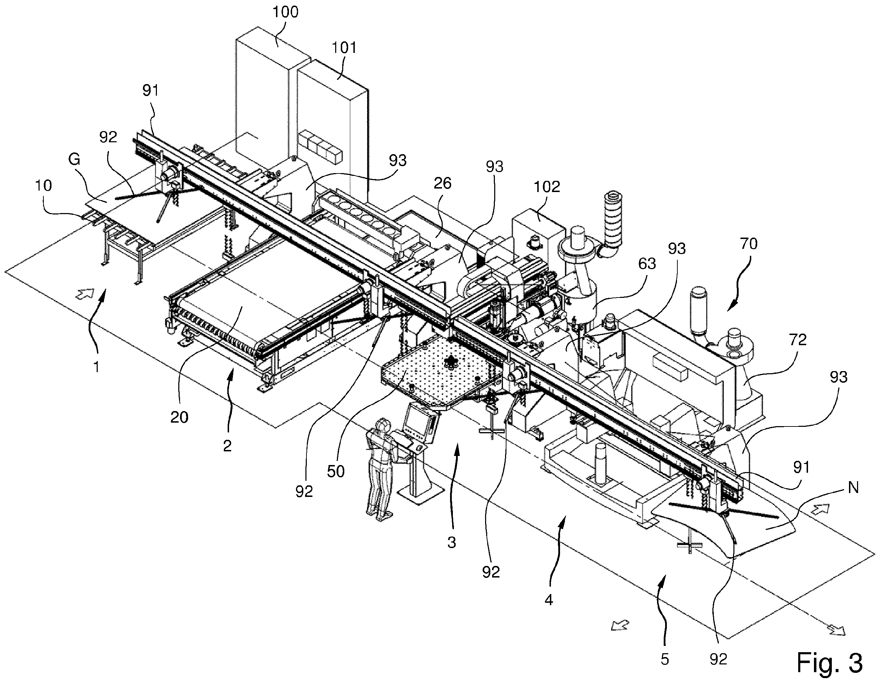

Coming back to Figs. 1-3, the machine 70 has at least one drilling tool 71 in the form of a drill, by means of which at least one hole can be drilled in a useful part N, and having a device for supplying and removing coolant. For this purpose, a suction device 72 is shown in Fig. 1 and 3. The machine 70 may be provided with two coaxial drilling tools 71 between which the useful part N can be positioned to drill a hole from both sides.

An ultrasonic actuator can be provided on the holder for holding the useful part N in order to cause the holder to oscillate. This allows the drilling speed to be increased. Also, the precision and/or fineness of the drilling surface and also the service life of the drilling tool 71 can be improved.

### Measuring device

In order to allow a more optimal process flow, the system has a measuring device that supplies measurement signals at different positions in the installation and at different times. These measurement signals, which define specific measured variables of the respective machine 20, 50, 70 and of the glass pane G/the useful part N, can be processed by the control device 100-103 to form correction signals that affect the process flow of a glass pane that is currently being processed or that is subsequently processed into a finished glass pane.

To generate the measurement signals, sensors can be provided that are arranged in a stationary and/or movable manner. Measurement signals can also be those that include a measured variable that specifies a process parameter of at least one component of the machine 20, 50, 70 while a processing step is being carried out.

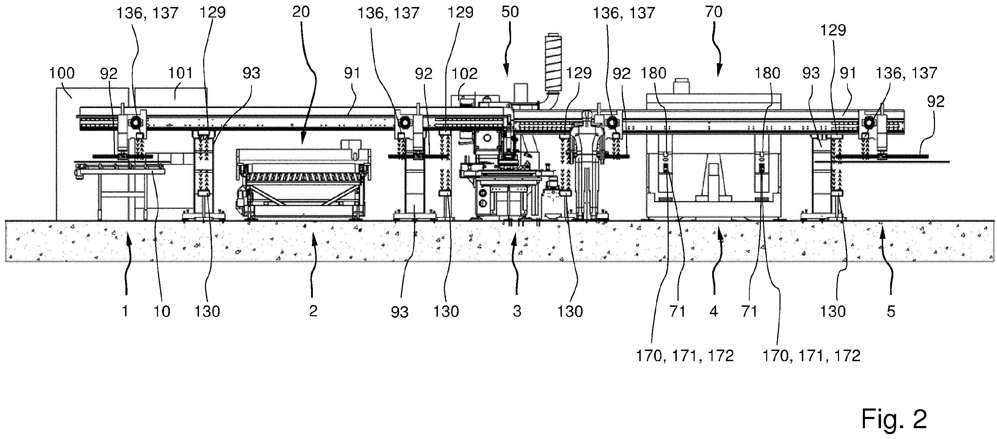

Sensors 129, 130, 136, 137, 170-172, 180 are shown by way of example in Fig. 2. A respective sensor 129, 130 is arranged between two adjacent stations 1-5. A sensor 129 can be arranged on the longitudinal support 91, for example. A sensor 130 can be arranged such that it is supported on the ground. A respective sensor 129, 130 can analyze a glass pane G or the useful part N, which is transported by a receiving device 92.

Sensors 136 and 137 are each arranged on a receiving device 92, for example. The respective sensor 130, 136, 137 is used, for example, to generate measurement signals that comprise a measured variable that defines a state parameter of at least part of the glass pane G. The measurement by the sensor 136, 137 can take place when the glass pane G or the useful part N has not yet been picked up by the receiving device 92. In this case, the receiving device 92 can move relative to the glass pane G or the useful part N. Alternatively or additionally, the measurement can be carried out when the glass pane G or the useful part N has been picked up by the receiving device 92.

The sensors 170-172, 180 are arranged on the machine 70 for drilling.

Sensors 131-133 are shown by way of example in Fig. 4. A sensor 131 is in this case arranged, for example in a fixed manner, on the machine 20. It is also conceivable to provide a sensor that can be attached to the glass pane G from below, for example. Sensor 132 and 133 are arranged on the bridge 23.

In addition to sensors 132, 133, sensor 135, which is arranged on the cutting tool 30, is shown by way of example in Fig. 5.

Sensors 152-154 are indicated in Fig. 9 by way of example. The sensor 152 is arranged, for example, on the carriage 56 on which the grinding tool 60 is arranged and has a first sensor part that analyzes the useful part N before the grinding intervention, and a second sensor part that analyzes the useful part N after the grinding intervention. The sensor 153 and the sensor 154 are fixed, for example, to the chassis of the machine 50 and/or to the grinding table 51.

Sensors 150-152 and 160 are indicated in Fig. 10. The sensor 150 and the sensor 151 are arranged in a suction cup 53, for example.

Using the measuring device, measurements can be carried out both during the execution of a processing step (cutting, breaking, grinding or drilling) (hereinafter also referred to as "dynamic measurement") and outside a processing step, i.e., before and/or after a processing step and thus when the glass pane G or the useful part N is not being processed (hereinafter also referred to as "static measurement"). The dynamic measurement is carried out in such a way that the temporal course of a process parameter of at least one component of the device that is active during processing, for example the corresponding tool 30, 40, 60, 71, and/or the temporal course of a process parameter of the glass pane G and/or of the useful part N is recorded. The measurement is carried out in such a way that it is carried out as a function of the relative position of the tool 30, 40, 60, 71 in relation to the contour K. This allows the process parameters to be recorded and evaluated, among other things in case of certain contours, for example in case of tight radii. The static measurement is carried out in such a way that a state parameter of the glass pane G or the useful part N and/or at least one tool 30, 40, 60, 71 is recorded.
a) Embodiments of dynamic measurements in the individual processing steps are explained below.

### Cutting processing step

One or more of the following measured variables can be recorded during cutting as a function of time and the relative position of the cutting tool 30 in relation to the contour K:
- For example, a measured variable is recorded that is based on the measurement of the force that the cutting tool 30 exerts on the glass pane G. The force can be, for example, the normal force and/or a transverse force thereto. To measure the force, for example, the pressure on the pneumatic system can be recorded in a pneumatic actuator for raising and lowering the cutting tool 30, and/or the current of the drives with which the bridge 23 and carriage 24 are moved can be evaluated. Alternatively or additionally, a force measuring sensor can be provided, for example a sensor that acts piezoelectrically, capacitively, and/or piezoresistively.
- For example, a measured variable is recorded that is based on the measurement of the speed at which the cutting tool 30 is moved along the glass pane G. For this purpose, for example, the signals with which the drives for moving the bridge 23 and the carriage 24 for moving the cutting tool 30 are controlled can be tapped. A respective drive has, for example, a displacement or position measuring system, by means of which position data that can be directly evaluated can be supplied.
- When a cutting wheel is provided which is tiltable, an additional axis of movement defined by a tilting angle is provided. A measured variable may be recorded that is based on the tilting angle of the cutting wheel (see angle a in Fig. 14). As the cutting wheel is moved along a scoring line, the tilting angle may be adjusted.
- For example, the target position of an axis of movement of the machine 20, which specifies a movement during cutting, is recorded as the first measured variable and the actual position during cutting is recorded as the second measured variable. The deviation between the actual and target position results in the contouring error of the axis of movement. If the characteristics of the control circuit are known and can be described mathematically, conclusions can be drawn, for example from the contouring error, about the magnitude and sign of an external force.
- For example, at least one sensor 131 is provided for measuring sound emission as a measured variable. The sensor 131 can be a microphone, for example, that is used to detect airborne noise. It is also conceivable to use a plurality of sensors 131 of the same type in order to detect spatial and/or temporal differences in sound emission. Alternatively or additionally, the sensor 131 can be used to detect structure-borne noise and be configured in such a way that it contacts the glass pane G, for example directly, for example from above or from below through a hole in the conveyor belt 22, and/or the sensor 131 contacts a component that contacts the glass pane G, for example the conveyor belt 22 or the cutting tool 30. During cutting, the action of the cutting tool 30 on the glass sheet G generates a sound. From the measurements of said sensor, it is possible to recognize, for example, if an undesired breakout next to the scoring line ("chipping") can occur at a specific point on the contour K. The measurement of the sound allows the pressure of the cutting tool 30 on the glass pane G, among other things, to be continuously adjusted during the cutting process if required.
- For example, the temporal course of the quantity of cutting oil that is supplied to the cutting tool 30 is measured. This can be done, for example, by means of an optical sensor 132 in the form of a camera, see Fig. 4, and/or by means of a flow meter sensor. Additionally or alternatively, it is conceivable to continuously measure the filling level of the cutting oil tank.
- At least one sensor 133 is provided, for example, with which the thickness of the glass pane can be measured at different positions. A feeler, for example, that is arranged on the carriage 24 is suitable as the sensor 133, see Fig. 4. The measurement of the glass pane thickness allows the pressure of the cutting tool 30 on the glass pane G to be dynamically adjusted, for example, during the cutting process.
- An acceleration sensor 135 is provided, for example, that serves to measure vibrations and is arranged, for example, in the vicinity of the cutting tool 30, see Fig. 5.
- It is also possible, for example, to provide an exciter in order to excite the cutting tool 30, for example in the ultrasonic range, and to measure the temporal course of the energy that is required by the exciter.

In order to determine the relative position of the cutting tool 30 in relation to the contour K in the case of the measured variables specified above, the signals with which the drives for moving the bridge 23 and the carriage 24 for moving the cutting tool 30 and for raising and lowering the cutting tool 30 are controlled can be tapped and evaluated, for example.

### Breaking processing step

One or more of the following measured variables can be recorded during breaking depending on the time and the relative position of the at least one breaking tool 40 in relation to the contour K:
- For example, a measured variable is recorded that is based on the measurement of the force that the breaking tool 40 exerts on the glass pane G. The force can be, for example, the normal force and/or a transverse force thereto. To measure the force, for example, the pressure on the pneumatic system can be recorded in a pneumatic actuator for raising and lowering the breaking tool 40, and/or the current of the drives with which the bridge 23 and carriage 24 are moved can be evaluated. Alternatively or additionally, a force measuring sensor can be provided, for example a sensor that acts piezoelectrically, capacitively and/or piezoresistively.
- For example, a measured variable is recorded that indicates the positions and, optionally, orientation and tilt angle of the breaking tool 40 at which it contacts the glass pane G during breaking, and/or that indicates the speed at which the breaking tool 40 is moved when it contacts the glass pane G. For example, the breaking tool 40 for breaking off the edge region B is lowered at various points onto the glass surface and/or, after being lowered, is moved along the edge region B along a specific path at a specific speed. For this purpose, for example, the signals with which the drives for moving the breaking tool 40 are controlled can be tapped.
- For example, at least one sensor for measuring sound emission is provided as a measured variable. For example, the sensor 131 or a plurality of the sensors 131 can be used as a sensor. During the breaking process, the action of the breaking tool 40 on the glass sheet G generates a sound. From the measurement of said sensor, it is possible to recognize, for example, when the crack in the glass pane G propagates to the rear side. The measurement of the sound then allows the pressure of the breaking tool 40 on the glass pane G to be adjusted, for example, during the breaking process if required. The acoustic measurement also allows unwanted chipping to be detected at a specific point on the contour K, in particular at the transition from the broken edge to the glass front side or rear side, and other anomalies and thus to deduce a quality defect in the broken edge.
- An optical sensor, for example a camera, can be used to detect how the break runs along a scoring line and/or how the splinters form at the transition from the break edge to the upper side of the glass.
- For example, an acceleration sensor is provided that serves to measure vibrations. For example, a sensor in the form of acceleration sensor 135 can be used for this purpose.

In order to determine the relative position of the breaking tool 40 in relation to the contour K in the case of the measured variables specified above, the signals with which the drives for moving the bridge 23 and the carriage 24 for moving the breaking tool 40 are controlled can be tapped and evaluated, for example. Alternatively or additionally, the position of the breaking tool 40 can be recorded by a camera and determined by means of image processing.

### Grinding processing step

One or more of the following measured variables can be recorded during grinding as a function of time and the relative position of the grinding tool 60 in relation to the contour K:
- For example, a measured variable is recorded that is based on the measurement of the force that the grinding tool 60 exerts on the useful part N. The force can be, for example, radial and/or transverse thereto and/or can comprise the torque of the grinding tool 60. For this purpose, for example, the respective current that the drives need to move the support 52 and the grinding tool 60 can be measured and evaluated. Alternatively or additionally, a force measuring sensor can be provided, for example a sensor that acts piezoelectrically, capacitively and/or piezoresistively.
- At least one sensor is provided, for example, with which the force that is exerted on the support 52 during grinding can be detected. For example, a suction cup 53 is equipped with such a sensor 150, see Fig. 10.
- For example, at least one sensor 151 is provided for measuring sound emission as a measured variable, see Fig. 10. The sensor 151 can be used, for example, to detect structure-borne noise and contacts the useful part N directly, for example from above or below, for example also through a hole in the suction cup 53, and/or the sensor 151 contacts a component that contacts the useful part N. As an alternative or in addition, the sensor 151 can be a microphone that is used to detect airborne noise. It is also conceivable to use a plurality of sensors 151 of the same type in order to detect spatial and/or temporal differences in sound emission. In the case of the machine 50 according to Fig. 9, it is conceivable, for example, to arrange a plurality of sensors 151 in the form of microphones on the grinding table 51. During grinding, the action of the grinding tool 30 on the useful part N generates a sound.
- For example, a measured variable is recorded that is based on the measurement of the energy used to drive the grinding tool 60. For example, the current used to drive the electric motor 55 can be detected. The measurement of said energy may be used to detect e.g. the occurrence of firing during the grinding process. Another measured variable may be based on detecting the vibrations of the bearing of the electric motor 55 which are related to the specific forces occurring in the grinding process.
- For example, at least one optical sensor 152 is provided (see Fig. 9) that comprises a camera and/or a laser, for example, and detects at least one of the following parameters:
   o translucency (light transmission) of the glass edge that is to be ground and/or that has been ground,
   o dark spots on the glass edge resulting from overheating during grinding ("firing"),
   o profile of the glass edge, e.g. its position in the Z direction
   o places where the edge is damaged,
   o roughness of the glass edge,
   o dimensions of the useful part N,
   o spray pattern of the coolant that is supplied to or removed from the grinding tool 60.
- It is also conceivable to record a measured variable that the coolant discharged from the grinding tool 60 has, for example the temperature and/or chemical composition of the coolant.
- At least one sensor 153 is provided, for example, that measures the vibration and/or the sag of the useful part N during the grinding process, see Fig. 9. The sensor can comprise a laser, for example, to measure the distance. By measuring the position of the glass edge in the Z direction during the grinding process, the position of the grinding tool 60 in the Z direction may be adjusted by a feedback control.
- For example, an acceleration sensor is provided that is arranged in the vicinity of the grinding tool 60 and with which vibrations of the useful part N, in particular in the Z direction, can be detected.
- At least one temperature sensor 154 (see Fig. 9), for example an infrared sensor, is provided, for example, that is used to measure at least one of the following components during the grinding process:
   o edge of the useful part N,
   o grinding tool 60,
   o coolant that is supplied to or removed from the grinding tool 60. For example, the temperature of the coolant in the housing 62 and/or in the suction tube 64 to the cyclone separator 63 can be measured. For example, it is possible to detect the state of a temperature indicator in the coolant in such a way that it changes when a predetermined temperature is reached. In this way, local temperature increases in the region between a grinding tool and the useful part, which is hardly or not at all accessible, can be determined.
- For example, the target position of an axis of movement of the machine 50, which specifies a movement during grinding, is recorded as the first measured variable and the actual position during grinding as the second measured variable. The deviation between the actual and target position results in the contouring error of the axis of movement. If the characteristics of the control circuit are known and can be described mathematically, conclusions can be drawn, for example from the contouring error, about the magnitude and sign of an external force.
- It is also conceivable to detect the current used by the drive moving the grinding tool 60 the Y axis, which current may indicate an imbalance of the grinding tool 60.

In order to determine the relative position of the grinding tool 30 in relation to the contour K in the case of the measured variables specified above, the signals with which the drives for moving the grinding table 51 and the grinding tool 30 are controlled can be tapped and evaluated. Alternatively or in addition, the position of the useful part N, in particular in the Z direction, can be detected by means of a laser distance sensor and/or a capacitive sensor.

### Drilling processing step

One or more of the following measured variables can be recorded during drilling as a function of the time and the relative position of the drilling tool 71 in relation to the contour K:
- For example, a measured variable is recorded that is based on the measurement of the force that the drilling tool 71 exerts on the useful part N. The force can be, for example, axial and/or transverse thereto and/or can comprise the torque of the drilling tool 71. For this purpose, for example, the respective current that the drives need to move the drilling tool 71 can be measured and evaluated. Alternatively or additionally, a force measuring sensor can be provided, for example a sensor that acts piezoelectrically, capacitively, and/or piezoresistively.
- For example, at least one sensor 170 is provided for measuring sound emission as a measured variable, which sensor, for example, contacts the useful part N, see Fig. 2. During drilling, the action of the drilling tool 71 on the useful part N generates a sound.
- For example, a measured variable is recorded that is based on the measurement of the energy used to drive the drilling tool 71. For example, the current used to power the electric motor for the drill can be detected.
- At least one sensor 171 is provided, for example, that measures the vibration of the useful part N during the drilling process, see Fig. 2. The sensor 171 can, for example, be in the form of an acceleration sensor on the drilling tool 71 or a laser position sensor.
- At least one temperature sensor 172 (see Fig. 2), for example an infrared sensor, is provided, for example, that is used to measure at least one of the following components during the drilling process:
   o edge of the useful part N,
   o drilling tool 71,
   o coolant discharged from the drilling tool 71.
- It is also conceivable, for example, to record the relative depth of the bore. For example, it is conceivable to dynamically record countersinking during drilling by measuring the current that is required to drive the drilling tool 71 and that increases during countersinking, and/or vibrations and/or noise, etc. As a result, the countersink depth can be controlled very precisely based on the feedback from the drilling tool. Fig. 15 shows an example of a drilling tool 71 in form of a drill including a cylindrical portion 71a, which is followed by a collar portion 71b. The drill is configured to be hollow. The collar portion 71b, which in the present example has a frustoconical shape, serves for beveling the hole produced by the cylindrical portion 71a. By measuring the current for driving the drilling tool 71 the different positions of the drill relative to useful part N can determined: For example, the current increases when the drilling tool 71 contacts the useful part N. A further increase occurs when the collar portion 71b comes into contact with useful part N. Subsequently, the current increases further, typically in a linear manner, as the collar portion 71b gets deeper into the useful part N. Thus, one can determine the length of the cylindrical portion 71a as well as the start of the beveling process by the collar portion 71b. Further, one can control the depth of beveling produced.
**b)** Embodiments of static measurements outside a processing step are explained below.

### Measurements before cutting

One or more of the following measured variables can be recorded before cutting:
- At least one optical sensor is provided, for example, with which the dimensions of the glass pane G can be detected. For this purpose, for example, a sensor 136 in the form of a camera and/or a laser is provided at the first station 1 and arranged, for example, on the receiving device 92, see Fig. 2. Additionally or alternatively, the sensor 132 at the second station 2 can be used.
- At least one weighing sensor 137 is provided, for example, with which the weight of the glass pane G can be determined and that is arranged, for example, on the receiving device 92, see Fig. 2.
- A temperature sensor, for example, is provided on the transfer device 90, for example, in order to detect any changes in length and, among other things, to correct the position in which the glass pane G is to be placed on the machine 20.
- At least one sensor is provided, for example, with which the thickness of the glass pane can be measured at different positions. The sensor 133 at the second station 2 can be used for this purpose, for example.
- At least one sensor is provided, for example, in order to determine the position of the glass pane G relative to a predetermined coordinate system. One or more of the sensors 132, 133, 136 can be used for this purpose, for example.
- If a cutting wheel is used as the cutting tool, at least one sensor can be provided in order to determine the sharpness of the cutting wheel.

### Measurements after cutting and preferably before breaking

One or more of the following measured variables can be recorded after cutting:
- At least one optical sensor 132 is provided, for example, with which the shape, for example the width and/or depth, and/or the geometric position of the furrow that forms a scoring line is detected. The geometric position of an auxiliary scoring line, in particular where it meets the scoring line defining the contour K, can also be recorded. A camera, for example, that is arranged on the carriage 24 is suitable as the sensor 132, see Fig. 4. It is also possible to use a device on the carriage 24 having a light source, for example a laser, for measuring reflection.
- At least one device is provided, for example, that comprises, for example, the optical sensor 132 in the form of a camera that is equipped with a polarization filter and that is used to detect mechanical stresses in the glass pane G by means of image processing.
- The optical sensor 132 in the form of a camera can also be used, for example, to detect the trace of cutting oil on the upper side of the glass.

### Measurements after breaking and preferably before grinding

One or more of the following measured variables can be recorded before breaking:
- At least one optical sensor is provided, for example, in order to detect the shape of the broken edge of the useful part N. For this purpose, for example, the sensor 132 can be used in the form of a camera. Alternatively or in addition, it is also possible to use a light source, for example a laser, to record the reflectivity of the broken edge. By measuring the broken edge, it is possible to determine where there are undesired deviations from the ideal edge, i.e., from an edge that is ideally perpendicular to the upper side of the glass. The formation of splinters at the transition from the break edge to the upper side of the glass can also be recorded.
- At least one optical sensor is provided, for example, with which the dimensions of the useful part N can be detected. For this purpose, for example, the sensor 132 can be used in the form of a camera and/or a laser.
- At least one weighing sensor is provided, for example, with which the weight of the useful part N can be determined. For this purpose, for example, the weighing sensor 137 on the receiving device 92 can be used.
- It is also conceivable to analyze the waste pieces (borders) that are broken off the glass pane. Analyses and conclusions about the cutting/breaking process can be made based on the broken-off edges. For example, it is possible to analyze whether a long straight edge breaks off in one piece or whether there are a plurality of sections or what the broken edge of a waste piece looks like, etc.

### Measurements after grinding and preferably before drilling

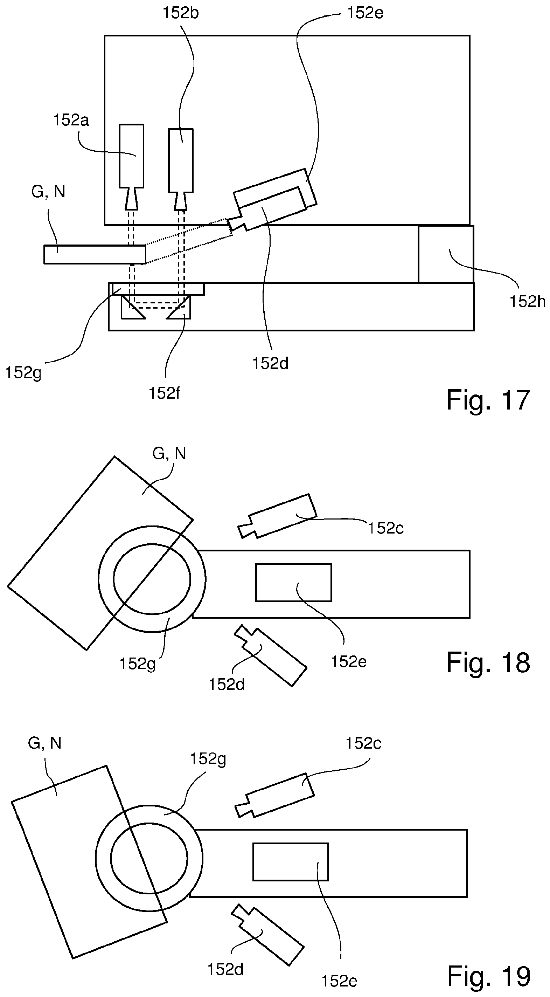

One or more of the following measured variables can be recorded after grinding:
- The optical sensor 152 is used to detect at least one of the following parameters:
   o translucency (light transmission) of the ground glass edge,
   o dark spots on the glass edge resulting from excessive heating during grinding,
   o surface condition of the glass edge, in particular undesirable grinding patterns such as chatter marks/vibration marks
   o profile of the glass edge,
   o places where the edge is damaged,
   o roughness of the glass edge,
   o dimensions of the useful part N, in particular size and/or shape.
- The roughness of the glass edge can also be detected using mechanical measuring sensors, laser reflection measurement, cameras including image processing and/or a colorimeter.
- The dimensions of the useful part N can also be detected by means of a camera and image processing, mechanical measuring sensors, calipers and/or laser distance measurement.
- The position of the glass edge in the Z direction can be determined e.g. by means of the measuring device as described below in relation to Fig. 17. Based on this information, the position of the grinding tool 60 in the Z direction may be adjusted for the useful parts N to be ground subsequently.
- At least one weighing sensor is provided with which the weight of the ground useful part N can be determined. For this purpose, for example, the weighing sensor 137 on the receiving device 92 can be used.
- At least one sensor is provided, for example, with which the thickness of the glass pane can be measured, for example at the intended drilling locations. A feeler that is arranged at the drilling station 4, for example, is suitable as a sensor.
- At least one optical and/or tactile sensor 160 is provided, for example, in order to detect the geometry of the grinding surface of the grinding tool 60. For example, said grinding tool is designed as a grinding wheel having a specific groove profile. The groove depth, for example, can be detected by means of the sensor 160 in order to adapt the feed of the grinding tool 60 accordingly the next time a useful part N is machined.
- It is also conceivable to measure the temperature that has set in on the grinding tool 60, in particular a grinding wheel body, after the grinding process. With increasing blunting of the geometrically undefined cutting edges (seen across a plurality of glass panes), there is a higher proportion of friction, which leads to more heat.

### Measurements after drilling

One or more of the following measured variables can be recorded after drilling:
- For example, at least one optical sensor 130 is provided (see Fig. 2) that comprises a camera and/or a laser, for example, and detects at least one of the following parameters:
   o translucency of the drilled edge in the useful part N,
   o profile of the drilled edge, in particular the length of the chamfer,
   o places where the drilled edge and drilled hole are damaged.
- The roughness of the drilled hole can also be recorded by means of a mechanical sensor, laser reflection measurement, a camera including image processing and/or a colorimeter.
- The dimensions of the drilled hole can also be detected by means of a camera and image processing, mechanical measuring sensors, calipers and/or laser distance measurement.
- At least one weighing sensor is provided, for example, with which the weight of the ground and drilled useful part N can be determined. For this purpose, for example, the weighing sensor 137 on the receiving device 92 can be used.
- At least one optical and/or tactile sensor 180 is provided, for example, in order to record the length of the drilling tool 71.

In general, at least one sensor, for example an optical sensor such as a camera, laser, etc., can be provided after a processing step in order to record the dimensions of the glass pane G or the useful part N, the shape of the broken or ground edge and the shape of any drilled holes. In particular, automatic quality control of the produced useful part N can be carried out after the last processing step.

Fig. 17 and 18 show an embodiment of a measuring device which is configured to sense the glass front side, rear side and edge. The measuring device is used e.g. before and/or after the breaking processing step and/or after the grinding processing step. Here, the glass pane and the useful part are processed in a horizontal position. Thus, the glass front side corresponds to the top side of the glass pane/useful part, and the glass rear side corresponds to its bottom side. The measuring device may be e.g. positioned on the carriage 56 of the machine 50, on a separate carriage which is arranged on the machine 50 and displaceable e.g. in the Y direction or on a unit separate from the machine 50. In one embodiment, the measuring device is arranged on the carriage 56 and in front of the grinding tool 60 and is arranged in a movable manner relative to the grinding tool 60, e.g. the measuring device may be lifted or moved in another manner so that it gives way to the grinding tool 60 when the latter contacts the glass edge for grinding. Here, the measuring device comprises the following components:
- a first camera 152a for imaging the glass front side and/or at least part of the edge,
- a second camera 152b for imaging the glass rear side and/or at least part of the edge via a mirror unit 152f for reflecting light by an angle, here twice the angle of 90 degrees,
- an illumination unit 152g e.g. in the form of a ring-like illumination,
- a third camera 152c for imaging the edge of the useful part N (or glass pane G),
- a fourth camera 152d for imaging the edge of the useful part N (or glass pane G),
- a laser sensor 152e for scanning the edge of the useful part N (or glass pane G).

The cameras 152a and 152b are arranged above the glass front side, whereas the mirror unit 152f and the illumination unit 152g are arranged below the glass rear side. This arrangement takes into consideration that the space below the useful part N is limited when the latter is positioned e.g. on the support 52 of the machine 50. The illumination unit 152g may also be arranged above the glass front side.

The provision of the laser sensor 152e is optional. It may be omitted or replaced by an additional camera.

The measuring device may comprise monitoring means, e.g. one or more position sensors, in order to avoid an unwanted collision with part of the machine 50 and/or the useful part N/glass pane G during movement of the measuring device.

The components 152a-152e may be arranged on a first carrier and the components 152f, 152g may be arranged on a second carrier, whereas the two carriers may be connected via a connection 152h

Preferably, the components 152a-152e are positioned such that they sense the same region on the glass edge and are moved such that said region follows along the glass edge as the latter is rotated.

The cameras 152a and 152b are applicable to detect one or more of the following characteristics:
- fractures (in particular chips, microcracks and/or conchoidal fractures)
- position of the broken edge
- under- and/or overbreak
- position of the ground edge
- under- and/or overgrinding
- firing during grinding

One possible procedure of observing a useful part N arranged on the machine 50 by the cameras 152c, 152d is as follows: The useful part N is fixed on the support 52 of the rotatable grinding table 51. During rotation of the useful part N cameras 152c and 152d are moved, e.g. linearly, and image the glass edge. The provision of two cameras 152c and 152d arranged at an angle has the effect that, as the useful part N is rotated, always one of the cameras 152c or 152d is positioned substantially in front of the glass edge so that the distortion of the imaged glass edge is reduced and the glass edge is sufficiently illuminated by the illumination unit 152g, see Fig. 18 and 19.

The illumination unit 152g is configured such the illumination intensity is as uniform as possible also for glass edges which are not right-angled.

Here, the ring-like illumination 152g is configured such that it has a diameter as small as possible so that the useful part N can be supported close to its edge by support 52 and a collision of the support 52 with the measuring device is avoided when the cameras 152c, 152d are moved. Here, a laser sensor 152e in form of a laser position measuring device is provided to scan the glass edge as the latter is imaged by the cameras 152c, 152d. In an alternative embodiment not all of the components 152c-152e are provided, e.g. the cameras 152c, 152d only or the laser sensor 152g only.

Instead of the provision of two cameras 152d, 152e which are movable only linearly, it is also conceivable to provide only one camera 152d or 152e which is arranged in a rotatable and linearly displaceable manner.

One or more of the following characteristics can be detected by the measuring device as described:
- position of the broken edge, e.g. the position in the vertical direction Z
- half-penny cracks
- microcracks
- roughness of the edge
- under- and/or overbreak
- regions on the edge not correctly ground, e.g. shiners
- firing during grinding

The sensing accuracy of the components 152a-152e is chosen depending on the application. In one embodiment, the components 152a, 152b, 152e have a high accuracy, which may be in the range of view micrometers, e.g. 1-2 micrometers. Ideally, the cameras 152a, 152b are arranged perpendicular to the glass surface so that images are taken which allow a direct measurement of dimensions.

Cameras 152c, 152d may be less expensive ones, e.g. a webcams or industrial cameras, and may record images which allow only a qualitative observation of edge. In one embodiment, the cameras 152c, 152d are calibrated by using calibration images which are taken e.g. by at least one of the cameras 152a, 152b having an increased imaging accuracy. The calibration images may be produced e.g. by imaging a calibrating object which has predetermined dimensions, e.g. a template with precise markings. Once calibrated, the cameras 152c, 152d allow a quantitative measurement similar as the more expensive cameras 152a, 152b. Thus, the latter may be replaced by cheaper cameras such as cameras 152c, 152d when calibrated.

In order to synchronize the images taken by the different cameras 152a-152d, a timer may be provided. A time signal supplied by the timer causes on the one hand each image to be provided with a timestamp and on the other hand the controller 102 of machine 50 to record the machine coordinates of the moving components. By combining the data on the timestamps and the machine coordinates the images taken can be mapped on the geometry of the glass edge. Thereby, specific features as explained above can be located on the glass edge.

In one embodiment, a cleaning unit is provided for cleaning the glass edge before applying the measuring device. Such a cleaning is beneficial as the glass may be contaminated with cutting oil, cooling water, glass dust or other impurities, which may impede the optical observation by the cameras 152a-152d. The cleaning unit is arranged on the machine 50 such that it is movable relative to the grinding tool in a similar way as the measuring device.

Positioning the measuring device on the machine 50 allows the monitoring of the cutting, breaking and grinding process. The cutting and breaking process can be evaluated before the useful part N is ground and the grinding process can be evaluated after the useful part N is ground. Both steps of evaluation can be performed without removing the useful part N from the support 52 so that an increased precision in the evaluation can be achieved.

### Control device

The measurement signals supplied by the measuring device are received by the control device 100-103 and evaluated to form measurement data. The control device is equipped, for example, with an artificial intelligence algorithm that allows the measurement data to be evaluated and one or more correction signals to be formed with which the control of the machines 20, 50, 70 during processing of the current glass pane G and/or useful part N can be adjusted during a current or subsequent processing step or during processing of a subsequent glass pane G and/or useful part N, the adjustment taking place as a function of the relative position of the tool 30, 40, 60, 71 in relation to the contour K.

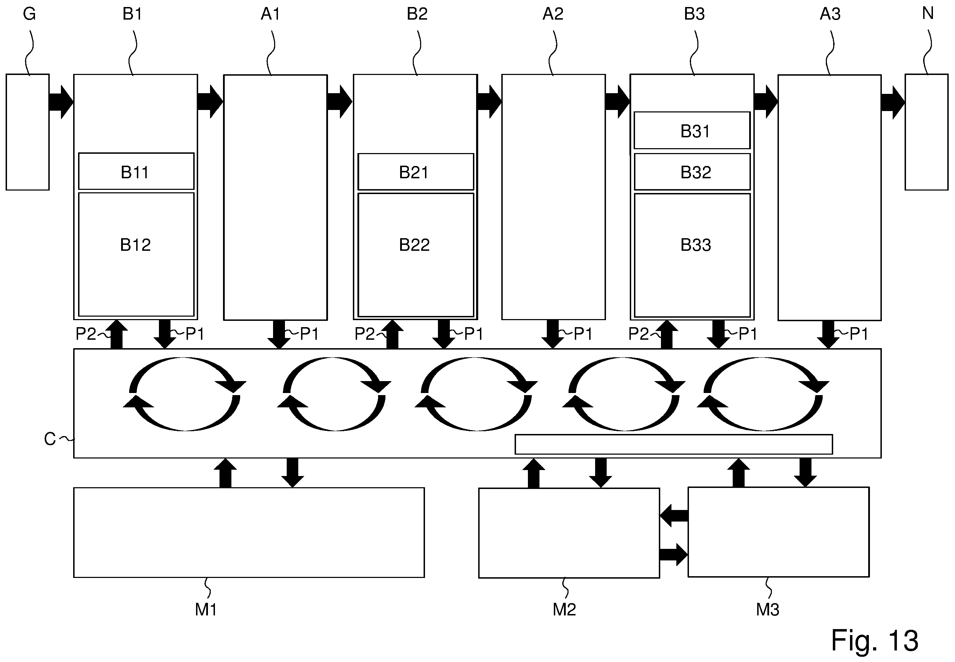

Fig. 13 schematically shows the process flow in which the glass pane G is fed to the process, then
- cut in processing step B1,
- analyzed in step A1, which is between the two processing steps B1 and B2,
- broken in processing step B2,
- analyzed in step A2, which is between the two processing steps B2 and B3,
- ground in processing step B3,
- analyzed in step A3, which is after processing step B3,
and then leaves the process as a useful part N. The processing step of drilling and a further analysis step are not shown here, but can be provided subsequent to step A3.

In steps A1-A3, B1-B3, measurement signals are generated that comprise measured variables and that are fed to the control device C, as indicated by the arrows P1. The control device C, which is, for example, the control device 100-103, evaluates the measured variables and reacts to the machines 20, 50 with corresponding correction signals, such that the processing B1, B2, B3 can be adapted, as indicated by the arrows P2.

In processing step B1, drives are controlled that cause the cutting tool 30 to move (field B11 in Fig. 13). The drives can be controlled by a feedback control via the control device. As explained above, sensors can be provided in order to record, for example, the force, amount of cutting oil and/or other measured variables such as a position of an axis of movement of the cutting device, e.g. the tilting angle of a tiltable cutting wheel (field B12 in Fig. 13).

As explained above, measured variables can be recorded in step A1, for example the depth of the scoring line, chipping at the transition to the front of the glass, etc.

In processing step B2, drives are controlled that cause the breaking tool 40 to move (field B21 in Fig. 13). The drives can be controlled by a feedback control via the control device. As explained above, sensors can be provided in order to record, for example, the force, the position of the auxiliary scoring lines and/or other measured variables (field B22 in Fig. 13).

As explained above, measured variables can be recorded in step A2, for example unevenness of the broken edges, damage to said edges (in particular conchoidal fractures), size of the useful part N, etc. For example, the magnitude of the conchoidal fractures and frequency of said conchoidal fracture magnitude can be determined over a specific length of the glass edge. Measured variables may define further properties of the shape of the edge which the useful part N broken out has such as the occurrence of half-penny cracks, in particular their shape, frequency and depth, and/or microcracks and/or the angle of the edge (over- or underbreack) and/or unwanted protrusions. The measured variables may be used to adjust the parameters for cutting such that e.g. the half-penny cracks with desired properties are produced.

In processing step B3, drives are controlled that cause the grinding tool 60 and the support 52 to move (field B31 in Fig. 13). The drives can be controlled by a feedback control via the control device C.

As explained above, measured variables can be recorded in step B3, for example power consumption of the drives, force, vibrations, sound, temperature, etc. (field B33 in Fig. 13).

As explained above, measured variables can be recorded in step A3, for example the shape of the ground edge and the position thereof, roughness of said edge, damage to said edge (in particular conchoidal fractures, scratches), size of the useful part N, etc. Measured variables may define further properties of the shape of the ground edge such as the occurrence of regions which are not correctly ground and firing marks, in particular regions of melted glass produced by an overheat during grinding.

The measuring device as described above in relation to Fig. 17 may be applied in step A2 and/or A3 and also in step A1 when configured such that it can sense the glass pane on machine 20.

The control device C is preferably equipped with an algorithm based on artificial intelligence, in particular an algorithm for machine learning and/or for pattern recognition. To obtain training data, test runs are carried out, for example, in which the scoring lines and the broken and/or ground edges are recorded and evaluated in steps A1-A3, for example by means of the existing measuring device. The trained algorithm can then be used to evaluate the measurement data, which is generated later in the current process flow, and to generate corresponding correction signals.

The memory is, for example, an internal data memory of the system, and/or the system has an interface for exchanging data with an external data memory, for example via a network.

Training data can also be provided by comparing measured variables from the various steps A1-A3, B1-B3 with one another. For example, the measurement in step A2 reveals that the broken-off edge is excessively chipped in the case of a tight curve. The algorithm of the control device C can therefore generate correction signals that, during processing of a subsequent glass pane, adjust, for example, the pressure that the cutting tool 30 exerts on the glass surface when cutting a tight curve, and then in step A2 analyze whether the chipping on the broken-off edge is reduced.

Training data can also be provided by evaluating and storing measurement data on dynamic and static measured variables from previously processed glass panes.

The parameters resulting from the desired shape and size of a useful part N can also serve as training data. For example, in step A2 it is determined that the broken edge is too far away from the desired contour K, such that too much has to be removed in processing step A3. The algorithm of the control device C can therefore set the scoring line closer to the desired contour when a subsequent glass pane is processed, such that less grinding has to be done.

Overall, the algorithm of the control device C allows the process sequences to be optimized during cutting and breaking (field M1 in Fig. 13), during grinding (field M2 in Fig. 13) and, if provided, during drilling through data-driven modeling, without necessarily having to understand the physical behavior of the machining processes in detail.

For example, the proportion of broken-off glass, the quality of the useful part, and the processing time can be optimized.

Alternatively or additionally, it is also conceivable to equip the control device C with a physical model (field M3 in Fig. 13) that models processing step B3, for example.

### Applications

By providing "artificial intelligence", the installation is capable of learning and can constantly develop further. It is therefore able to optimize itself independently. The installation can also be operated more autonomously. The demands on the operating personnel and their workload are therefore reduced.

By providing the measuring device, the installation can obtain a comprehensive picture of the process parameters and the results obtained (reactions of the glass during processing and properties of the processed glass).

Components that are already available as standard can also be used to design the measuring device. For example, the existing drives, in particular actuators, can supply usable measurement data.

The measuring device is configured in such a way that the measurement signals that are generated during an ongoing processing step are recorded at a sufficient temporal resolution. The temporal resolution of the measurement data is preferably at least 10 Hz and with increasing preference at least 100 Hz, at least 1000 Hz and at least 10 kHz. The control device C is accordingly configured to generate control signals that have a comparable temporal resolution. Said resolution is thus preferably at least 10 Hz and, with increasing preference, at least 100 Hz, at least 1000 Hz and at least 10 kHz. In this way, the control device C can make an adjustment to the control based on the measurement data during ongoing processing.

As explained above, various measured variables are conceivable:
- temperature on the transfer device 92 (allows, for example, correction of the glass deposit position),
- reaction of the glass during processing (e.g. noise development and noise evaluation during grinding),
- real position and orientation of a glass pane on a machine 20, 50, 70 (e.g. through optical evaluation),
- edge quality after grinding (for example "chips" on ground edge or profile symmetry),
- power consumption of the grinding tool 60 in relation to the path along which it is moved relative to the useful part N.

The measurement data from the measuring device is collected, evaluated and preferably stored by the control device C. For evaluation, the control device C comprises an evaluation unit. Depending on the process and machine configuration, the control device C decides on targeted influence and the intensity with which said influence is exercised.
- The control device C can, for example, intervene simultaneously (for example in fractions of a second) in dynamic, ongoing processes with the aim of optimizing them. Self-regulation can thus take place within the process.
   ∘ Example: If an excessive cutting pressure leads to crackling noises (specific frequency range) during cutting, said cutting pressure is immediately reduced to a level without crackling noises, which results in a better cutting result. Self-regulation can thus take place within the process.
   ∘ Example: During the grinding process, an evaluation of grinding noises determines that the glass is increasingly vibrating. The grinding parameters are therefore adjusted immediately.
- The control device C can use previously determined and/or calculated information to adapt subsequent processes on the same workpiece.
   ∘ Example: After breaking, it is found that a corner of the glass protrudes beyond the desired contour. The subsequent grinding machine 50 works at this exact location using adapted parameters in order to grind away the corner for the best possible result.
- The control device C can collect information and adjust parameters across a plurality of workpieces/batches.
   ∘ Example: After breaking, an oblique break profile is observed at the edge of the glass. The breaking path or breaking parameters are adjusted from glass to glass in order to iteratively approach the ideal value.

It is possible to network the installation with other installations of the same type in order to share successful optimization with said other installations. The information obtained can also be made available for the purposes of product documentation and/or as input for upstream and downstream process chains.

The glass that can be processed using the installation is glass panes that are used in the following applications, among others: vehicles, architecture, displays, solar panels, kitchens (in particular oven doors and cooktops). The glass pane can also be a ceramic glass.

Automatic quality control can also be carried out by measuring the glass pane G or the useful part N outside of a processing step. However, said quality control is optional and may only be required initially. With the help of artificial intelligence, in particular machine learning and/or pattern recognition, conclusions can also be drawn indirectly about quality by evaluating the dynamic measured variables that are recorded during the processes.

The measuring device can be used to record static measured variables after a processing step (cutting, breaking, grinding or drilling), for example, as explained above, the condition of the broken/ground edge. The measured variables can be recorded in a position-resolved manner at least in part, preferably entirely along the circumference of the edge of the processed glass, and can be related to the measured variables that were recorded during the previous processing step as a function of the position of the tool in relation to the contour. The position resolution for the static measured variables is preferably at least the value from the product of the temporal resolution of the measurement during processing multiplied by the processing speed along the edge of the glass, particularly preferably at least 10% of said value.

By comparing static and dynamic measured variables, optimized process parameters can be found and one or more process steps can be better tailored to the requirements (for example, precision, tool wear, energy requirements, cycle time, etc.). For example, dynamic measured variables from two or more different processing steps, each followed by a quality measurement to obtain static measured variables, can be carried out and analyzed to be able to identify relationships that allow continuous improvement with regard to process parameters. Only one or a plurality of process parameters can be varied to find the optimization direction.

In a further embodiment, the measuring device of the installation can record other measured variables, such as changes in the glass properties, temperature fluctuations in the environment, etc., in order to achieve further optimization in production.

In one embodiment, the installation is optimized in such a way that a useful part having the desired contour can be produced right away, i.e., without going through test runs.

The recording and evaluation of measured variables also makes it possible to improve the cutting plan and/or breaking plan for processing subsequent glass panes. The cutting plan defines the contour of the at least one useful part and optionally one or more auxiliary cutting lines for defining a break in the unused edge region of the glass pane. The breaking plan specifies where and how a force should be applied to the cut glass pane to initiate breakage. The cutting plan and the breaking plan can be improved, for example, in that the portion of the edge of the glass pane that does not belong to the useful part N and is therefore broken off and/or ground down is reduced.

The measuring and control devices of the installation also allow for improvements in terms of monitoring, diagnostics and maintenance. This can be, for example, the state of the tool or another component of the machine, in particular the consumables (coolants, lubricants, energy consumption). With the measuring device, for example, one or more measured variables of the tool or another component of the respective machine can be recorded and, if necessary, related to the dynamic and/or static measured variables to be able to detect any undesirable deviations, in particular anomalies. The installation can be configured in such a way that, for example, a message is generated when a tool has become too worn and maintenance is therefore required.

A prediction can be made of tool wear and the correct time for tool replacement. Predictive maintenance and/or condition monitoring is therefore possible for both the tool and the machine. It is also possible to improve and preferably optimize control of the machine by adapting the machine parameters, such that the wear on the tool or other parts of the machine is reduced. For example, the drives can be controlled in such a way that acceleration and/or deceleration is optimized.

In one possible embodiment, the system has, for example, a processing device for shaping and/or sharpening the grinding tool 60. The control device 100-103 is configured in such a way that it activates the processing device as a function of at least one of the measured variables and/or the at least one measured state variable of the grinding tool 60. For example, the activation is such that the processing device specifies the force and/or speed of a sharpening stone for processing the grinding tool 60 and/or the frequency and/or duration of the sharpening process with the sharpening stone and/or that the grinding tool 60 is processed as a function of the shape of an edge of the sharpening stone. The sharpening process by the sharpening stone may be controlled e.g. based on the current used by the electric motor 55 and/or on the force with which the sharpening stone is pressed against the grinding tool 60. A linear drive may be provided for displacing the sharpening stone.

The actual sharpness of the grinding tool 60 may be determined e.g. based on the energy used for driving the grinding tool 60. For example, the current used by the electric motor 55 may be measured and integrated over the time during which the grinding tool 60 grinds the glass edge or a particular portion thereof. When said integrated current exceeds a predetermined threshold, then the grinding tool 60 is sharpened. Depending on the choice of the threshold, this sharpening may be initiated once or several times during the usual service life of the grinding tool 60.

In one embodiment, the grinding process is configured such that the grinding tool 60 is self-sharpened. The grinding tool is e.g. configured as a wheel comprising grains, such as diamonds, embedded in a matrix via bonding layers. The grinding process, e.g. the feeding of the grinding tool 60 towards the glass edge, may be controlled such that when grains are released from the wheel their bonding layers are also abraded, so that the next grains occur on the surface. In that way, no separate sharpening of the grinding tool 60 is needed. It conceivable to provide for an extra part on the useful part N which is grinded down by the grinding tool 60 in order to achieve a self-sharpening effect.

In an analogous manner as for the grinding tool 60, the actual sharpness of the drilling tool 71 may be determined e.g. based on the energy used for driving the drilling tool 71. For example, the current used by the drive may be measured and integrated over the time during which the drilling tool 71 drills a hole. When said integrated current exceeds a predetermined threshold, then the drilling tool 71 is sharpened by a sharpening device.

In one embodiment, the drilling process is configured such that the drilling tool 71 is self-sharpened.

From the preceding description, numerous modifications are accessible to a person skilled in the art without going beyond the scope of protection of the invention defined by the claims.

In the installation shown in the figures, cutting and breaking are performed on the same machine 20. Among other things, the components 23, 24, 27, 28 for moving the tools 30, 40 are therefore part of the cutting device for cutting the glass pane G as well as part of the breaking device for breaking the glass pane G. Alternatively, it is conceivable to design the system in such a way that cutting and breaking are carried out at different locations, such that the cutting and breaking device can have separate parts in order to move the cutting tool 30 and the breaking tool 40.

It is also conceivable to provide a machine with which a plurality of processes of cutting, breaking, grinding and, if provided, drilling can be carried out.

As described above a pneumatic actuator may be provided to move the cutting tool 30 or the breaking tool 40. Alternatively, a linear drive may be provided for moving tool 30, 40 towards to and away from a glass pane to be processed. A linear drive may allow for more precise movements and/or improved force control than a pneumatic actuator. Preferably, the linear drive includes at least one position sensor providing a signal on the stroke position and with it the position of tool 30, 40. The linear drive is configured such that the tool position can be determined when the tool 30, 40 contacts a surface. Thus, one can detect whether the tool 30, 40 is facing a glass pane or not.

In one embodiment, the linear drive is applied to measure the unevenness of the surface by which a glass pane is supported during cutting and/or breaking, e.g. the conveyor belt 22 of machine 20. The measured unevenness may be stored, e.g. in a look-up table, and may be taken into consideration when a thin glass pane, e.g. one with a thickness of less than 1 mm, is to be processed as its surface may not be perfectly plane when lying on an uneven support surface and thus may vary in the vertical direction.

In a further embodiment, the linear drive is applied to measure the thickness of a glass plane to be processed. This allows the starting position of the tool 30, 40 to be chosen closer to the glass pane. Thereby, the path can be reduced along which the tool 30, 40 is moved between the starting position and the position, in which the tool 30, 40 acts on the glass pane. Overall, the cycle time between two cutting and/or breaking processes can be reduced.

In another embodiment the same drive, preferably linear drive, may be applied to move alternatively the cutting tool 30 and the breaking tool 40 towards the glass pane. Fig. 16 shows an example of a possible kinematics. The drive 35 is coupled via articulation means 36 to the cutting tool 30 and the breaking tool 40, whereas a guiding means 37 are arranged between the cutting tool 30 and the articulation means 36. When the axle of the drive 35 is moved downwards, the cutting tool 30 is pressed downwards, and when the axle is moved upwards, the breaking tool is pressed downwards.

In a further embodiment the mass of the mechanism for the cutting tool 30 is reduced by the provision of spring and/or magnetic means. Thereby, the forces occurring in the cutting process can be determined with reduced noise and loss.

By determining the position of the cutting tool 30, in particular by the provision of the linear drive as explained above, the sharpness of the cutting wheel may be determined. As the cutting wheel becomes less sharp, it will enter less deeply into the glass and thus the position is changed. Further, the sharpness of the cutting wheel may be determined by detecting vibrations of the cutting tool 30 during cutting.

## Claims

1. An installation for producing at least one useful part (N) from a glass pane (G) by means of processing steps, which include cutting, breaking and grinding, wherein the shape of the at least one useful part is defined by a contour (K), wherein the installation comprises:
• a cutting device having at least one cutting tool (30) for cutting the glass pane,
• a breaking device having at least one breaking tool (40) for separating out the useful part,
• a grinding device (50) having at least one grinding tool (60) for grinding the edge of the useful part,
wherein the respective tool (30, 40, 60) and the glass pane or the useful part are arranged so as to be movable relative to one another,
• a measuring device (129-133, 135-137, 150-154, 160, 170-172, 180) for generating measurement signals, which
comprise a first measured variable and at least one of a second, third, fourth and fifth measured variable, wherein
the first measured variable is detectable during the execution of one of the processing steps as a function of the relative position of the tool being effective in said processing step in relation to the contour and said first measured variable defines a first process parameter of at least one first component (30, 40, 60) of the device, which first component is effective in said processing step, and/or of the glass pane and/or of the useful part,
the second measured variable is detectable during the execution of another processing step as a function of the relative position of the tool being effective in said other processing step in relation to the contour and said second measured variable defines a second process parameter of at least one second component (30, 40, 60) of the device, which second component is effective in said other processing step, and/or of the glass pane and/or of the useful part,
the third measured variable is detectable during the execution of the processing step in which the first measured variable can be detected as a function of the relative position of the tool being effective in said processing step in relation to the contour and said third measured variable defines a third process parameter of at least one third component (30, 40, 60) of the device, which third component is effective in said processing step, and/or of the glass pane and/or of the useful part,
the fourth measured variable specifies a process parameter of at least one fourth component (30, 40, 60) of the device during the execution of the processing step in which the first or second measured variable can be detected, which fourth component is effective in said processing step and which is preferably the first or second component of the device, and
the fifth measured variable is detectable outside a processing step, which fifth measured variable defines a state parameter of at least part of the glass pane,
• and a control device (100-103) for controlling the cutting device, breaking device and grinding device, with which control device the measurement signals can be received in order to form measurement data from the measured variables, wherein the control device is configured to form correction signals based on the measurement data, with which correction signals at least one of the devices can be controlled in an adapted manner when processing the glass pane and/or the useful part and/or when processing a subsequent glass pane and/or useful part.

2. The installation according to claim 1, wherein the measuring device (129-133, 135-137, 150-154, 160, 170-172, 180) has at least one of the following features A1)-A9):
A1) the measuring device is configured in such a way that the fifth measured variable can be detected along at least part of the edge of the useful part (N) after breaking and/or grinding,
A2) the measuring device is configured in such a way that measurement signals can be generated based on the measurement of a force; of a path, in particular a contouring error in an axis of movement of a device; of a speed; of an acceleration, in particular a vibration; of an energy requirement, in particular a current of a drive; of a temperature; an acoustic measurement; an optical measurement, in particular an optical measurement for generating signals, which signals can be generated by means of reflection on the useful part and/or modulation of a light beam and/or detection of the light intensity; a capacitive measurement; an inductive measurement; a measurement of a magnetic field; and/or a tactile measurement,
A3) the measuring device comprises at least one photo sensor unit, in particular a camera (130, 136, 152, 152a-152d) for capturing at least part of the glass pane (G); the control device is preferably equipped with an image processing algorithm, which is configured to process images supplied by the camera,
A4) the measuring device is configured in such a way that the control device (100-103) can generate measurement data for the first, second, third and/or fourth measured variable from the received measurement signals, which measurement data has a temporal resolution of at least 10 Hz and, with increasing preference, at least 100 Hz, at least 1000 Hz and at least 10 kHz,
A5) the measuring device is configured in such a way that the measurement signals comprise at least two and preferably three of the second, third, fourth and fifth measured variables,
A6) the measuring device is configured in such a way that the measurement signals comprise the first, second and fifth measured variable and a sixth measured variable, wherein the sixth measured variable can be detected during a different processing step than when the first and second measured variable were detected or outside a different processing step than when the fifth measured variable is detectable,
A7) the measuring device comprises at least one sensor for measuring the ambient conditions of the installation, in particular the ambient temperature, humidity and/or light intensity, for generating measurement signals containing a further measured variable, which measurement signals can be fed to the control device,
A8) the measurement signals that can be generated by the measuring device comprise a measured variable that is the fifth measured variable or a further measured variable and that defines a state parameter of the broken-off part of the glass pane (G),
A9) the measuring device is configured in such a way that the control device (100-103) can generate measurement data for the first, second, third, fourth and/or fifth measured variable from the received measurement signals, which measurement data has a spatial resolution of at least 10 cm, preferably at least 1 cm and particularly preferably at least 1 mm.

3. The installation according to any of the preceding claims, wherein the control device (100-103) has at least one of the following features B1)-B5):
B1) the control device is equipped with an algorithm based on artificial intelligence, in particular an algorithm for machine learning and/or for pattern recognition, wherein the correction signals can be generated by means of the algorithm,
B2) the control device is configured to evaluate the measurement data when determining the cutting plan and/or breaking plan of a glass pane (G) to be subsequently processed, in particular when determining at least one auxiliary cutting line (H),
B3) the control device is configured to generate correction signals during the processing step in which the first and third measured variable can be detected, which correction signals lead to a change in the first and/or third measured variable in order to dynamically adjust the processing step,
B4) the control device is configured to generate correction signals during the processing step in which the first or second measured variable can be detected, which correction signals lead to a change in the first and/or fourth measured variable or in the second and/or fourth measured variable in order to dynamically adjust the processing step,
B5) the control device is configured to generate the correction signals by including measurement data that is based on at least one of the measured variables and that was formed during previous production of useful parts.

4. The installation according to any of the preceding claims, which installation comprises an internal data memory and/or an interface for exchanging data with an external data memory, in particular via a network, wherein at least part of the measurement data can be stored in the internal and/or external data memory, such that it can be taken into account when determining the correction signals for subsequently processed glass panes (G).

5. The installation according to any of the preceding claims, wherein the measurement signals that can be generated by the measuring device (129-133, 135-137, 150-154, 160, 170-172, 180) comprise at least one measured state variable that defines a state parameter of at least one component of the installation, in particular one of the tools (30, 40, 60), after a processing step, wherein the control device (100-103) is configured to take the measured state variable into account when forming the correction signals and/or to generate a message signal when the measured state variable reaches a threshold value.

6. The installation according to any of the preceding claims, having a processing device for shaping and/or sharpening the at least one grinding tool (60), wherein the control device (100-103) is configured to activate the processing device as a function of at least one of the measured variables and/or of the at least one measured state variable; the activation is preferably such that the processing device specifies the frequency and/or duration of the sharpening process with a sharpening stone for processing the grinding tool and/or the power of the sharpening stone and/or the grinding tool is preferably processed as a function of the shape of an edge of the sharpening stone.

7. The installation according to any of the preceding claims, wherein the measurement signals that can be generated by the measuring device (129-133, 135-137, 150-154, 160, 170-172, 180) comprise a measured variable
that is the first, second, third, fourth or another measured variable
and is associated with the processing step of cutting and that defines a process parameter that comprises at least one of the following:
• force with which the cutting tool (30) acts on the glass pane (G),
• speed at which the cutting tool can be moved along the glass pane,
• sound generated by the glass pane during cutting,
• vibration with which the glass pane and/or the cutting tool vibrates during cutting,
• thickness of the glass pane,
• amount of cutting oil that can be applied to the cutting line,
• mechanical stresses in the glass pane,
• depth and/or width of the cutting line,
• number and/or quantity of glass splinters along the cutting line,
• power of at least one drive for moving the cutting tool,
• positions at which the cutting tool contacts the glass pane,
• temperature of the useful part,
• transparency of the useful part,
• actual position of an axis of movement of the cutting device, in particular the actual position along a least one linear axis and/or around a rotational axis and/or the actual tilting angle of a tiltable cutting wheel of the at least one cutting tool with respect to the vertical axis,
• target position of an axis of movement of the cutting device, in particular the target position along a least one linear axis and/or around a rotational axis and/or the target tilting angle of a tiltable cutting wheel of the at least one cutting tool with respect to the vertical axis,
• contouring error in an axis of movement of the cutting device.

8. The installation according to any of the preceding claims, wherein the measurement signals that can be generated by the measuring device (129-133, 135-137, 150-154, 160, 170-172, 180) comprise a measured variable
that is the first, second, third, fourth or another measured variable and
is associated with the processing step of breaking and that defines a process parameter that comprises at least one of the following:
• force with which the breaking tool (40) acts on the glass pane (G),
• positions at which the breaking tool contacts the glass pane,
• speed at which the breaking tool can be moved along the glass pane,
• sound produced by the glass pane during breaking,
• vibration with which the glass pane and/or the breaking tool vibrates during breaking,
• shape and/or geometric profile and/or temporal profile of the edge that forms during breaking,
• thickness of the glass pane,
• mechanical stresses in the glass pane,
• temperature of the glass pane,
• intensity and/or wavelength of a breaking tool in the form of light.

9. The installation according to any of the preceding claims, wherein the measurement signals that can be generated by the measuring device (129-133, 135-137, 150-154, 160, 170-172, 180) comprise a measured variable
that is the first, second, third, fourth or another measured variable
and is associated with the processing step of grinding and that defines a process parameter that comprises at least one of the following:
• force with which the grinding tool (60) acts on the useful part (N),
• force with which the useful part acts on the support on which the useful part rests during grinding,
• sound generated by the useful part during grinding,
• vibration with which the useful part and/or the grinding tool vibrates during grinding,
• energy to move the grinding tool, in particular power of a drive,
• temperature of the useful part, the grinding tool and/or the coolant for the grinding tool,
• shape, roughness, translucency and/or color of the edge of the useful part,
• actual position of an axis of movement of the grinding device,
• target position of an axis of movement of the grinding device,
• contouring error in an axis of movement of the grinding device,
• light, in particular intensity and/or wavelength, that arises during the grinding process,
• amount of abraded particles in the coolant that can be removed from the grinding tool,
• property of the coolant that is supplied to and/or removed from the grinding tool,
• detection of the state of a temperature indicator in the coolant, wherein the detection preferably is such that the state of the temperature indicator changes from a predetermined temperature,
• properties of the grinding tool (60), in particular the shape and/or diameter thereof.

10. The installation according to any of the preceding claims, wherein the measurement signals that can be generated by the measuring device (129-133, 135-137, 150-154, 160, 170-172, 180) comprise a measured variable
that is the fifth or a further measured variable and that defines at least one of the following state parameters of the glass pane (G) or the useful part (N):
• dimensions of the glass pane or the useful part,
• thickness of the glass pane or the useful part,
• weight of the glass pane or the useful part,
• position of the glass pane or the useful part relative to a given coordinate system,
• shape in the depth direction and/or course of at least one cutting line on the glass pane,
• position of at least one auxiliary cutting line (H) on the glass pane,
• mechanical stresses in the glass pane,
• trace of cutting oil on the cut glass pane,
• shape of the edge (E) of the useful part that has been broken out, in particular conchoidal fractures at the transition to the upper side and/or underside of the useful part,
• shape of the edge (E') of the ground useful part,
• roughness, translucency and/or color of the ground edge.

11. The installation according to any of the preceding claims, which comprises at least one of the following features C1)-C11):
C1) the cutting tool comprises a cutting wheel (30), preferably the cutting wheel (30) is tiltable with respect to the vertical axis,
C2) the cutting tool can be moved in at least two axes (X, Y), preferably in three axes (X, Y, Z),
C3) the cutting tool can be rotated about an axis,
C4) the breaking tool comprises at least one breaking body (40) that can be moved in at least two axes (X, Y), preferably in three axes (X, Y, Z); the at least one breaking body can preferably also be pivoted about at least one axis,
C5) the breaking tool comprises at least two breaking bodies, wherein one breaking body can be moved along the front side of the glass pane (G) and the other breaking body can be moved along the rear side of the glass pane,
C6) the grinding tool comprises at least one grinding wheel (60),
C7) the grinding tool can be moved in at least one axis (Y), preferably in at least two axes (Y, Z), particularly preferably in at least three axes (X, Y, Z),
C8) the grinding device comprises a support (52) on which the useful part (N) rests during grinding and that can be rotated about an axis,
C9) the cutting device comprises a laser for generating a laser beam as a cutting tool,
C10) the breaking device comprises a device for heating and/or cooling the glass pane; at least one structure can preferably be produced by means of the device as a breaking tool, which structure is liquid, gaseous and/or in the form of light,
C11) the cutting tool and breaking tool are coupled to the same drive (35), wherein actuation of the drive causes movement either of the cutting tool or of the breaking tool towards the glass pane.

12. The installation according to any of the preceding claims, further comprising a drilling device (70) having at least one drilling tool (71) for drilling the useful part (N) as a further processing step, wherein the measurement signals that can be generated by the measuring device (129-133, 135-137, 150-154, 160, 170-172, 180) preferably comprise a first further measured variable that can be detected during drilling and that defines a further process parameter of at least one component (71) of the drilling device and/or the useful part, and/or a second further measured variable that defines a state parameter of the useful part after drilling.

13. The installation according to claim 12, comprising a processing device for sharpening the at least one drilling tool (71), wherein the control device (100-103) is configured to activate the processing device as a function of at least one of the measured variables, at least one of the further measured variables and/or of the at least one measured state variable; the activation is preferably such that the processing device specifies the frequency and/or duration of the sharpening process with a sharpening stone for processing the drilling tool and/or the power of the sharpening stone and/or the drilling tool is preferably processed as a function of the shape of an edge of the sharpening stone.

14. A method for producing at least one useful part (N) from a glass pane (G) by means of processing steps which include cutting, breaking and grinding, wherein the shape of the at least one useful part is defined by a contour (K), wherein
a cutting device cuts the glass pane by moving at least one cutting tool (30) and the glass pane relative to one another,
a breaking device separates out the useful part by moving at least one breaking tool (40) and the glass pane relative to one another, and
a grinding device (50) grinds an edge of the useful part by moving at least one grinding tool (60) and the useful part relative to one another, wherein
measurement signals are generated by means of a measuring device (129-133, 135-137, 150-154, 160, 170-172, 180), which measurement signals comprise a first measured variable and at least one of a second, third, fourth and fifth measured variable, wherein
the first measured variable is detected during the execution of one of the processing steps as a function of the relative position of the tool being effective in said processing step in relation to the contour and defines a first process parameter of at least one first component (30, 40, 60) of the device, which first component is effective in said processing step, and/or of the glass pane and/or of the useful part,
the second measured variable is detected during the execution of another processing step as a function of the relative position of the tool being effective in said processing step in relation to the contour and defines a second process parameter of at least one second component (30, 40, 60) of the device, which second component is effective in said other processing step, and/or of the glass pane and/or of the useful part,
the third measured variable is detected during the execution of the processing step in which the first measured variable is detected as a function of the relative position of the tool being effective in said processing step in relation to the contour and defines a third process parameter of at least one third component (30, 40, 60) of the device, which third component is effective in said processing step, and/or of the glass pane and/or of the useful part,
the fourth measured variable specifies a process parameter of at least one fourth component (30, 40, 60) of the device during the execution of the process step in which the first or second measured variable is detected, which fourth component is effective in said processing step and which is preferably the first or second component of the device, and
the fifth measured variable is detected outside a processing step and defines a state parameter of at least part of the glass pane,
and wherein a control device (100-103) for controlling the cutting device, breaking device and grinding device receives the measurement signals and forms measurement data from the measured variables, based on which measurement data the control device forms correction signals with which at least one of the devices is controlled in an adapted manner when processing the glass pane and/or the useful part and/or when processing a subsequent glass pane and/or useful part.

15. The method according to claim 14, which includes at least one of the following steps S1 to S3:
S1) the control device (100-103) controls based on the measurement data the at least one grinding tool (60) such that the latter remains sharp or has at least a reduced loss of sharpness when grinding the edge of the at least one useful part (N), preferably the control device (100-103) controls based on the measurement data the rotational speed, forward speed and/or grinding depth of cut of the least one grinding tool (60) to keep the grinding tool (60) sharp or cause at least a reduced loss of its sharpness,
S2) the cutting and breaking of the glass pane (G) are performed such that the useful part separated out of the glass pane includes at least one extra portion used to sharpen the grinding tool,
S3) the at least one useful part (N) is drilled by at least one drilling tool (71) of a drilling device (70), wherein the control device (100-103) controls based on the measurement data the at least one drilling tool (71) such that the latter remains sharp or has at least a reduced loss of sharpness when drilling the at least one useful part (N), in particular the control device (100-103) controls based on the measurement data the rotational speed and/or forward speed of the least one drilling tool (70) to keep the least one drilling tool (70) sharp or cause at least a reduced loss of its sharpness.

16. The method according to claim 14 or 15, which is carried out on an installation according to any of claims 1-13.

## Patentansprüche

1. Eine Anlage zum Herstellen mindestens eines Nutzteils (N) aus einer Glasscheibe (G) durch Bearbeitungsschritte, welche Schneiden, Brechen und Schleifen umfassen, wobei die Form des mindestens einen Nutzteils durch eine Kontur (K) definiert ist, wobei die Anlage umfasst:
• eine Schneidvorrichtung mit mindestens einem Schneidwerkzeug (30) zum Schneiden der Glasscheibe,
• eine Brechvorrichtung mit mindestens einem Brechwerkzeug (40) zum Heraustrennen des Nutzteils,
• eine Schleifvorrichtung (50) mit mindestens einem Schleifwerkzeug (60) zum Schleifen der Kante des Nutzteils,
wobei das jeweilige Werkzeug (30, 40, 60) und die Glasscheibe oder das Nutzteil relativ zueinander bewegbar angeordnet sind,
• eine Messeinrichtung (129-133, 135-137, 150-154, 160, 170-172, 180) zum Erzeugen von Messsignalen, welche
eine erste Messgrösse und mindestens eine aus einer zweiten, dritten, vierten und fünften Messgrösse umfassen, wobei
die erste Messgrösse während der Durchführung eines der Bearbeitungsschritte in Abhängigkeit der relativen Position des Werkzeugs, welches in besagtem Bearbeitungsschritt wirksam ist, in Bezug auf die Kontur erfassbar ist und besagte erste Messgrösse einen ersten Prozessparameter mindestens einer ersten Komponente (30, 40, 60) der Vorrichtung, welche erste Komponente bei besagtem Bearbeitungsschritt wirksam ist, und/oder der Glasscheibe und/oder des Nutzteils definiert,
die zweite Messgrösse während der Durchführung eines anderen Bearbeitungsschritts in Abhängigkeit der relativen Position des Werkzeugs, welches in besagtem anderen Bearbeitungsschritt wirksam ist, in Bezug auf die Kontur erfassbar ist und besagte zweite Messgrösse einen zweiten Prozessparameter mindestens einer zweiten Komponente (30, 40, 60) der Vorrichtung, welche zweite Komponente bei besagtem anderen Bearbeitungsschritt wirksam ist, und/oder der Glasscheibe und/oder des Nutzteils definiert,
die dritte Messgrösse während der Durchführung des Bearbeitungsschritts, bei welchem die erste Messgrösse erfassbar ist, in Abhängigkeit der relativen Position des Werkzeugs, welches in besagtem Bearbeitungsschritt wirksam ist, in Bezug auf die Kontur erfassbar ist und besagte dritte Messgrösse einen dritten Prozessparameter mindestens einer dritten Komponente (30, 40, 60) der Vorrichtung, welche dritte Komponente bei besagtem Bearbeitungsschritt wirksam ist, und/oder der Glasscheibe und/oder des Nutzteils definiert,
die vierte Messgrösse während der Durchführung des Bearbeitungsschritts, bei welchem die erste oder zweite Messgrösse erfassbar ist, einen Prozessparameter mindestens einer vierten Komponente (30, 40, 71) der Vorrichtung vorgibt, welche vierte Komponente bei diesem Bearbeitungsschritt wirksam ist und welche vorzugsweise die erste oder zweite Komponente der Vorrichtung ist, und
die fünfte Messgrösse ausserhalb eines Bearbeitungsschritts erfassbar ist. welche fünfte Messgrösse einen Zustandsparameter mindestens eines Teils der Glasscheibe definiert,
• und eine Steuereinrichtung (100-103) zum Ansteuern der Schneid-, Brech- und Schleifvorrichtung, mit welcher Steuereinrichtung die Messsignale empfangbar sind, um aus den Messgrössen Messdaten zu bilden, wobei die Steuereinrichtung eingerichtet ist, basierend auf den Messdaten Korrektursignale zu bilden, mit welchen bei der Bearbeitung der Glasscheibe und/oder des Nutzteils und/oder bei der Bearbeitung einer nachfolgenden Glasscheibe und/oder. Nutzteils mindestens eine der Vorrichtungen angepasst ansteuerbar ist.

2. Die Anlage gemäss Anspruch 1, wobei die Messeinrichtung (129-133, 135-137, 150-154, 160, 170-172, 180) mindestens eines der folgenden Merkmale A1) - A9) aufweist:
A1) die Messeinrichtung ist derart eingerichtet, dass die fünfte Messgrösse entlang mindestens eines Teils der Kante des Nutzteils (N) nach dem Brechen und/oder Schleifen erfassbar ist,
A2) die Messeinrichtung ist derart eingerichtet, dass Messsignale basierend auf der Messung einer Kraft; eines Wegs, insbesondere eines Schleppfehlers bei einer Bewegungsachse einer Vorrichtung; einer Geschwindigkeit; einer Beschleunigung, insbesondere einer Vibration; eines Energiebedarfs, insbesondere eines Stroms eines Antriebs; einer Temperatur; einer akustischen Messung; einer optischen Messung, insbesondere einer optischen Messung zur Erzeugung von Signalen, welche durch Reflexion am Nutzteil und/oder Modulation eines Lichtstrahls und/oder Erfassen der Lichtintensität erzeugbar sind; einer kapazitiven Messung; einer induktiven Messung, einer Messung eines Magnetfeldes; und/oder einer taktilen Messung erzeugbar sind,
A3) die Messeinrichtung umfasst mindestens eine Fotosensoreinheit, insbesondere eine Kamera (130, 136, 152, 152a-152d) zum Erfassen mindestens eines Teils der Glasscheibe (G); vorzugsweise ist die Steuereinrichtung mit einem Bildverarbeitungsalgorithmus ausgestattet, welche zum Verarbeiten von Bildern eingerichtet ist, welche die Kamera liefert,
A4) die Messeinrichtung ist derart eingerichtet, dass die Steuereinrichtung (100-103) aus den empfangenen Messsignalen Messdaten zur ersten, zweiten, dritten und/oder vierten Messgrösse erzeugen kann, welche Messdaten eine zeitliche Auflösung von mindestens 10 Hz und in steigender Bevorzugung von mindestens 100 Hz, mindestens 1000 Hz und mindestens 10 kHz aufweisen,
A5) die Messeinrichtung ist derart eingerichtet, dass die Messsignale mindestens zwei und vorzugsweise drei aus der zweiten, dritten, vierten und fünften Messgrösse umfassen,
A6) die Messeinrichtung ist derart eingerichtet, dass die Messsignale die erste, zweite, und fünfte Messgrösse sowie eine sechste Messgrösse umfassen, wobei die sechste Messgrösse während eines anderen Bearbeitungsschritt als beim Erfassen der ersten und zweiten Messgrösse oder ausserhalb eines anderen Bearbeitungsschritt als beim Erfassen der fünften Messgrösse erfassbar ist,
A7) die Messeinrichtung umfasst mindestens einen Sensor zum Messen der Umgebungsbedingungen der Anlage, insbesondere der Umgebungstemperatur, Luftfeuchtigkeit und/oder Lichtintensität, zur Erzeugung von einer weiteren Messgrösse enthaltenden Messsignalen, welche der Steuereinrichtung zuführbar sind,
A8) die von der Messeinrichtung erzeugbaren Messsignale umfassen eine Messgrösse, welche die fünfte Messgrösse oder eine weitere Messgrösse ist und welche einen Zustandsparameter des abgebrochenen Teils der Glasscheibe (G) definiert,
A9) die Messeinrichtung ist derart eingerichtet, dass die Steuereinrichtung (100-103) aus den empfangenen Messsignalen Messdaten zur ersten, zweiten, dritten, vierten und/oder fünften Messgrösse erzeugen kann, welche Messdaten eine örtliche Auflösung aufweisen, die mindestens 10 cm, vorzugsweise mindestens 1 cm und besonders bevorzugt mindestens 1 mm beträgt.

3. Die Anlage nach einem der vorangehenden Ansprüche, wobei die Steuereinrichtung (100-103) mindestens eines der folgenden Merkmale B1) - B5) aufweist:
B1) die Steuereinrichtung ist mit einem Algorithmus ausgestattet, der auf künstlicher Intelligenz basiert, insbesondere einem Algorithmus zum maschinellen Lernen und/oder zur Mustererkennung, wobei mittels des Algorithmus die Korrektursignale erzeugbar sind,
B2) die Steuereinrichtung ist eingerichtet, die Messdaten auszuwerten beim Festlegen des Schnittplans und/oder Bruchplans einer nachfolgend zu bearbeitenden Glasscheibe (G), insbesondere beim Festlegen mindestens einer Hilfsschnittlinie (H),
B3) die Steuereinrichtung ist eingerichtet, während des Bearbeitungsschritts, bei welchem die erste und dritte Messgrösse erfassbar sind, Korrektursignale zu erzeugen, welche zu einer Änderung in der ersten und/oder dritten Messgrösse führen, um den Bearbeitungsschritt dynamisch anzupassen,
B4) die Steuereinrichtung ist eingerichtet, während des Bearbeitungsschritts, bei welchem die erste oder zweite Messgrösse erfassbar ist, Korrektursignale zu erzeugen, welche zu einer Änderung in der ersten und/oder vierten Messgrösse oder in der zweiten und/oder vierten Messgrösse führen, um den Bearbeitungsschritt dynamisch anzupassen,
B5) die Steuereinrichtung ist eingerichtet, die Korrektursignale durch Einbezug von Messdaten zu erzeugen, welche auf mindestens eine der Messgrössen basieren und welche beim vorangehenden Herstellen von Nutzteilen gebildet wurden.

4. Die Anlage nach einem der vorangehenden Ansprüche, welche einen internen Datenspeicher und/oder eine Schnittstelle zum Austausch von Daten mit einem externen Datenspeicher, insbesondere über ein Netzwerk, umfasst, wobei mindestens ein Teil der Messdaten im internen und/oder externen Datenspeicher speicherbar sind, so dass sie bei der Bestimmung der Korrektursignale für nachfolgend bearbeitete Glasscheiben (G) berücksichtigbar sind.

5. Die Anlage nach einem der vorangehenden Ansprüche, wobei die von der Messeinrichtung (129-133, 135-137, 150-154, 160, 170-172, 180) erzeugbaren Messsignale mindestens eine Zustandsmessgrösse umfassen, welche einen Zustandsparameter mindestens einer Komponente der Anlage, insbesondere eines der Werkzeuge (30, 40, 60), nach einem Bearbeitungsschritt definiert, wobei die Steuereinrichtung (100-103) eingerichtet ist, die Zustandsmessgrösse bei der Bildung der Korrektursignale zu berücksichtigen und/oder ein Nachrichtensignal zu erzeugen, wenn die Zustandsmessgrösse einen Schwellenwert erreicht.

6. Die Anlage nach einem der vorangehenden Ansprüche, mit einer Bearbeitungseinrichtung zum Formen und/oder Schärfen des mindestens einen Schleifwerkzeugs (60), wobei die Steuereinrichtung (100-103) eingerichtet ist, die Bearbeitungseinrichtung in Abhängigkeit von mindestens einer der Messgrössen und/oder von der mindestens einen Zustandsmessgrösse zu aktivieren; vorzugsweise ist die Aktivierung derart, dass die Bearbeitungseinrichtung die Häufigkeit und/oder Dauer des Schärfvorgangs mit einem Schärfstein zur Bearbeitung des Schleifwerkzeugs und/oder die Kraft des Schärfsteins vorgibt und/oder vorzugsweise erfolgt die Bearbeitung des Schleifwerkzeugs in Abhängigkeit der Form einer Kante des Schärfsteins.

7. Die Anlage nach einem der vorangehenden Ansprüche, wobei die von der Messeinrichtung (129-133, 135-137, 150-154, 160, 170-172, 180) erzeugbaren Messsignale eine Messgrösse umfassen,
welche die erste, zweite, dritte, vierte oder eine weitere Messgrösse
und dem Bearbeitungsschritt des Schneidens zugeordnet ist und welche einen Prozessparameter definiert, welcher mindestens eines der folgenden umfasst:
• Kraft, mit welcher das Schneidwerkzeug (30) auf die Glasscheibe (G) wirkt,
• Geschwindigkeit, mit welcher das Schneidwerkzeug entlang der Glasscheibe bewegbar ist,
• Schall, welcher die Glasscheibe während des Schneidens erzeugt,
• Vibration, mit welcher die Glasscheibe und/oder das Schneidwerkzeug während des Schneidens vibriert,
• Dicke der Glasscheibe,
• Menge des Schneidöls, welcher auf die Schnittlinie applizierbar ist,
• mechanische Spannungen in der Glasscheibe,
• Tiefe und/oder Breite der Schnittlinie,
• Anzahl und/oder Menge von Glassplittern entlang der Schnittlinie,
• Strom mindestens eines Antriebs zum Bewegen des Schneidwerkzeugs,
• Positionen, bei welcher das Schneidwerkzeug die Glasscheibe kontaktiert,
• Temperatur des Nutzteils,
• Transparenz des Nutzteils,
• Istposition einer Bewegungsachse der Schneidvorrichtung, insbesondere die Istposition entlang mindestens einer linearen Achse und/oder um eine Drehachse und/oder den Ist-Neigungswinkel eines neigbaren Schneidrads des mindestens einem Schneidwerkzeugs in Bezug auf die vertikale Achse,
• Sollposition einer Bewegungsachse der Schneidvorrichtung, insbesondere die Sollposition entlang mindestens einer linearen Achse und/oder um eine Drehachse und/oder den Soll-Neigungswinkel eines neigbaren Schneidrads des mindestens einem Schneidwerkzeugs in Bezug auf die vertikale Achse,
• Schleppfehler bei einer Bewegungsachse der Schneidvorrichtung.

8. Die Anlage nach einem der vorangehenden Ansprüche, wobei die von der Messeinrichtung (129-133, 135-137, 150-154, 160, 170-172, 180) erzeugbaren Messsignale eine Messgrösse umfassen,
welche die erste, zweite, dritte, vierte oder eine weitere Messgrösse und
dem Bearbeitungsschritt des Brechens zugeordnet ist und welche einen Prozessparameter definiert, welcher mindestens eines der folgenden umfasst:
• Kraft, mit welcher das Brechwerkzeug (40) auf die Glasscheibe (G) wirkt,
• Positionen, bei welchen das Brechwerkzeug die Glasscheibe kontaktiert,
• Geschwindigkeit, mit welcher das Brechwerkzeug entlang der Glasscheibe bewegbar ist,
• Schall, welcher die Glasscheibe während des Brechens erzeugt,
• Vibration, mit welcher die Glasscheibe und/oder das Brechwerkzeug während des Brechens vibriert,
• Form und/oder geometrischen Verlauf und/oder zeitlichen Verlauf der sich bildenden Kante beim Brechen,
• Dicke der Glasscheibe,
• mechanische Spannungen in der Glasscheibe,
• Temperatur der Glasscheibe,
• Intensität und/oder Wellenläge eines lichtförmigen Brechwerkzeugs.

9. Die Anlage nach einem der vorangehenden Ansprüche, wobei die von der Messeinrichtung (129-133, 135-137, 150-154, 160, 170-172, 180) erzeugbaren Messsignale eine Messgrösse umfassen,
welche die erste, zweite, dritte, vierte oder eine weitere Messgrösse
und dem Bearbeitungsschritt des Schleifens zugeordnet ist und welche einen Prozessparameter definiert, welcher mindestens eines der folgenden umfasst:
• Kraft, mit welcher das Schleifwerkzeug (60) auf das Nutzteil (N) wirkt,
• Kraft, mit welcher das Nutzteil auf die Auflage wirkt, auf welcher das Nutzteil beim Schleifen aufliegt,
• Schall, welcher das Nutzteil während des Schleifens erzeugt,
• Vibration, mit welcher das Nutzteil und/oder das Schleifwerkzeug während des Schleifens vibriert,
• Energie zum Bewegen des Schleifwerkzeug, insbesondere Strom eines Antriebs,
• Temperatur des Nutzteils, des Schleifwerkzeugs und/oder des Kühlmittels für das Schleifwerkzeug,
• Form, Rauigkeit, Transluzenz und/oder Farbe der Kante des Nutzteils,
• Istposition einer Bewegungsachse der Schleifvorrichtung,
• Sollposition einer Bewegungsachse der Schleifvorrichtung,
• Schleppfehler bei einer Bewegungsachse der Schleifvorrichtung,
• Licht, insbesondere Intensität und/oder Wellenlänge, welche beim Schleifprozess entsteht,
• Menge von abgeschliffenen Partikeln, welche sich im Kühlmittel befindet, welches vom Schleifwerkzeug abführbar ist,
• Beschaffenheit des Kühlmittels, welches dem Schleifwerkzeug zugeführt und/oder von diesem abgeführt wird,
• Detektion des Zustandes eines Temperaturindikators im Kühlmittel, wobei die Detektion vorzugsweise derart ist, dass ab einer vorgegebenen Temperatur sich der Zustand des Temperaturindikators ändert,
• Eigenschaften des Schleifwerkzeugs (60), insbesondere dessen Form und/oder Durchmesser.

10. Die Anlage nach einem der vorangehenden Ansprüche, wobei die von der Messeinrichtung (129-133, 135-137, 150-154, 160, 170-172, 180) erzeugbaren Messsignale eine Messgrösse umfassen,
welche die fünfte oder eine weitere Messgrösse ist und welche mindestens einen der folgenden Zustandsparameter der Glasscheibe (G) oder des Nutzteils (N) definiert:
• Abmessungen der Glasscheibe oder. des Nutzteils,
• Dicke der Glasscheibe oder des Nutzteils,
• Gewicht der Glasscheibe oder des Nutzteils,
• Position der Glasscheibe oder. des Nutzteils relativ zu einem vorgegebenen Koordinatensystem,
• Form in Tiefenrichtung und/oder Verlauf mindestens einer Schnittlinie auf der Glasscheibe,
• Lage mindestens einer Hilfsschnittlinie (H) auf der Glasscheibe,
• mechanische Spannungen in der Glasscheibe,
• Spur des Schneidöls auf der geschnittenen Glasscheibe,
• Form der Kante (E) des herausgebrochenen Nutzteils, insbesondere Ausmuschelungen am Übergang zur Oberseite und/oder Unterseite des Nutzteils,
• Form der Kante (E') des geschliffenen Nutzteils,
• Rauigkeit, Transluzenz und/oder Farbe der geschliffenen Kante.

11. Die Anlage nach einem der vorangehenden Ansprüche, welche mindestens eines der folgenden Merkmale C1) - C11) umfasst:
C1) das Schneidwerkzeug umfasst ein Schneidrad (30), vorzugsweise ist das Schneidrad (30) neigbar in Bezug auf die vertikale Achse,
C2) das Schneidwerkzeug ist in mindestens zwei Achsen (X, Y), bevorzugt in drei Achsen (X, Y, Z), verfahrbar,
C3) das Schneidwerkzeug ist um eine Achse drehbar,
C4) das Brechwerkzeug umfasst mindestens einen Brechkörper (40), der in mindestens zwei Achsen (X, Y), bevorzugt in drei Achsen (X, Y, Z), verfahrbar ist; vorzugsweise ist der mindestens eine Brechkörper zusätzlich um mindestens eine Achse schwenkbar,
C5) das Brechwerkzeug umfasst mindestens zwei Brechkörper, wobei der eine Brechkörper entlang der Vorderseite der Glasscheibe (G) und der andere Brechkörper entlang der Rückseite der Glasscheibe verfahrbar sind,
C6) das Schleifwerkzeug umfasst mindestens eine Schleifscheibe (60),
C7) das Schleifwerkzeug ist in mindestens einer Achse (Y), bevorzugt in mindestens zwei Achsen (Y, Z), besonders bevorzugt in mindestens drei Achsen (X, Y, Z), verfahrbar,
C8) die Schleifvorrichtung umfasst eine Auflage (52), auf welcher das Nutzteil (N) beim Schleifen aufliegt und welche um eine Achse drehbar ist,
C9) das Schneidvorrichtung umfasst einen Laser zum Erzeugen eines Laserstrahls als Schneidwerkzeug,
C10) die Brechvorrichtung umfasst eine Einrichtung zum Erhitzen und/oder Kühlen der Glasscheibe; vorzugweise ist mittels der Einrichtung mindestens ein Gebilde als Brechwerkzeug erzeugbar, das flüssig, gasförmig und/oder lichtförmig ist,
C11) das Schneidwerkzeug und das Brechwerkzeug sind mit demselben Antrieb (35) gekoppelt, wobei die Betätigung des Antriebs eine Bewegung entweder des Schneidwerkzeugs oder des Brechwerkzeugs in Richtung der Glasscheibe bewirkt.

12. Die Anlage nach einem der vorangehenden Ansprüche, weiter umfassend eine Bohrvorrichtung (70) mit mindestens einem Bohrwerkzeug (71) zum Bohren des Nutzteils (N) als weiteren Bearbeitungsschritt, wobei vorzugsweise die von der Messeinrichtung (129-133, 135-137, 150-154, 160, 170-172, 180) erzeugbaren Messsignalen eine erste weitere Messgrösse umfassen, welche während des Bohrens erfassbar ist und welche einen weiteren Prozessparameter mindestens einer Komponente (71) der Bohrvorrichtung und/oder des Nutzteils definiert, und/oder eine zweite weitere Messgrösse, welche einen Zustandsparameter des Nutzteils nach dem Bohren definiert.

13. Die Anlage gemäss Anspruch 12, umfassend eine Bearbeitungseinrichtung zum Schärfen des mindestens einen Bohrwerkzeugs (71), wobei die Steuereinrichtung (100-103) eingerichtet ist, die Bearbeitungseinrichtung in Abhängigkeit von mindestens einer der Messgrössen, mindestens einer der weiteren Messgrössen und/oder der mindestens einen Zustandsmessgrösse zu aktivieren; die Aktivierung ist vorzugsweise derart, dass die Bearbeitungseinrichtung die Frequenz und/oder Dauer des Schärfvorgangs mit einem Schärfstein zur Bearbeitung des Bohrwerkzeugs und/oder die Kraft des Schärfsteins festlegt und/oder das Bohrwerkzeug wird vorzugsweise in Abhängigkeit von der Form einer Kante des Schärfsteins bearbeitet.

14. Ein Verfahren zum Herstellen mindestens eines Nutzteils (N) aus einer Glasscheibe (G) durch Bearbeitungsschritte, welche Schneiden, Brechen und Schleifen umfassen, wobei die Form des mindestens einen Nutzteils durch eine Kontur (K) definiert ist, wobei
eine Schneidvorrichtung die Glasscheibe schneidet, indem mindestens ein Schneidwerkzeug (30) und die Glasscheibe relativ zueinander bewegt werden,
eine Brechvorrichtung das Nutzteil heraustrennt, indem mindestens ein Brechwerkzeug (40) und die Glasscheibe relativ zueinander bewegt werden, und
eine Schleifvorrichtung (50) eine Kante des Nutzteils schleift, indem mindestens ein Schleifwerkzeug (60) und das Nutzteil relativ zueinander bewegt werden, wobei
mittels einer Messeinrichtung (129-133, 135-137, 150-154, 160, 170-172, 180) Messsignale erzeugt werden, welche
eine erste Messgrösse und mindestens eine aus einer zweiten, dritten, vierten und fünften Messgrösse umfassen, wobei
die erste Messgrösse während der Durchführung eines der Bearbeitungsschritte in Abhängigkeit der relativen Position des Werkzeugs, welches in besagtem Bearbeitungsschritt wirksam ist, in Bezug auf die Kontur erfasst wird und einen ersten Prozessparameter mindestens einer ersten Komponente (30, 40, 60) der Vorrichtung, welche erste Komponente bei besagtem Bearbeitungsschritt wirksam ist, und/oder der Glasscheibe und/oder des Nutzteils definiert,
die zweite Messgrösse während der Durchführung eines anderen Bearbeitungsschritts in Abhängigkeit der relativen Position des Werkzeugs, welches in besagtem Bearbeitungsschritt wirksam ist, in Bezug auf die Kontur erfasst wird und einen zweiten Prozessparameter mindestens einer zweiten Komponente (30, 40, 71) der Vorrichtung, welche zweite Komponente bei besagtem anderen Bearbeitungsschritt wirksam ist, und/oder der Glasscheibe und/oder des Nutzteils definiert,
die dritte Messgrösse während der Durchführung des Bearbeitungsschritts, bei welchem die erste Messgrösse erfasst wird, in Abhängigkeit der relativen Position des Werkzeugs, welches in besagtem Bearbeitungsschritt wirksam ist, in Bezug auf die Kontur erfasst wird und einen dritten Prozessparameter mindestens einer dritten Komponente (30, 40, 71) der Vorrichtung, welche dritte Komponente bei besagtem Bearbeitungsschritt wirksam ist, und/oder der Glasscheibe und/oder des Nutzteils definiert,
die vierte Messgrösse während der Durchführung des Bearbeitungsschritts, bei welchem die erste oder zweite Messgrösse erfasst wird, einen Prozessparameter mindestens einer vierten Komponente (30, 40, 60) der Vorrichtung vorgibt, welche vierte Komponente bei besagtem Bearbeitungsschritt wirksam ist und welche vorzugsweise die erste oder zweite Komponente der Vorrichtung ist, und
die fünfte Messgrösse ausserhalb eines Bearbeitungsschritts erfasst wird und einen Zustandsparameter mindestens eines Teils der Glasscheibe definiert,
und wobei eine Steuereinrichtung (100-103) zum Ansteuern der Schneid-, Brech- und Schleifvorrichtung die Messsignale empfängt und aus den Messgrössen Messdaten bildet, basierend auf welchen die Steuereinrichtung Korrektursignale bildet, mit welchen bei der Bearbeitung der Glasscheibe und/oder des Nutzteils und/oder bei der Bearbeitung einer nachfolgenden Glasscheibe und/oder Nutzteils mindestens eine der Vorrichtungen angepasst angesteuert wird.

15. Das Verfahren nach Anspruch 14, das mindestens einen der folgenden Schritte S1 bis S3 umfasst:
S1) die Steuereinrichtung (100-103) steuert auf der Grundlage der Messdaten das mindestens eine Schleifwerkzeug (60) so, dass dieses beim Schleifen der Kante des mindestens einen Nutzteils (N) scharf bleibt oder zumindest einen geringeren Schärfeverlust aufweist, vorzugsweise steuert die Steuereinrichtung (100-103) auf der Grundlage der Messdaten die Drehzahl, Vorschubgeschwindigkeit und/oder Schleifschnitttiefe des mindestens einen Schleifwerkzeugs (60), um das Schleifwerkzeug (60) scharf zu halten oder zumindest einen verringerten Verlust seiner Schärfe zu bewirken,
S2) das Schneiden und Brechen der Glasscheibe (G) werden so durchgeführt, dass der aus der Glasscheibe herausgetrennte Nutzteil mindestens einen zusätzlichen Abschnitt aufweist, der zum Schärfen des Schleifwerkzeugs verwendet wird,
S3) der mindestens eine Nutzteil (N) wird von mindestens einem Bohrwerkzeug (71) einer Bohrvorrichtung (70) gebohrt, wobei die Steuereinrichtung (100-103) auf der Grundlage der Messdaten das mindestens eine Bohrwerkzeug (71) so steuert, dass dieses beim Bohren des mindestens einen Nutzteils (N) scharf bleibt oder zumindest einen geringeren Schärfeverlust aufweist, insbesondere steuert die Steuereinrichtung (100-103) auf Basis der Messdaten die Drehzahl und/oder Vorschubgeschwindigkeit des mindestens einen Bohrwerkzeugs (70), um das mindestens eine Bohrwerkzeug (70) scharf zu halten oder zumindest einen verringerten Verlust seiner Schärfe zu bewirken.

16. Das Verfahren nach Anspruch 14 oder 15, welches auf einer Anlage nach einem der Ansprüche 1-13 durchgeführt wird.

## Revendications

1. Installation de fabrication d'au moins une pièce utile (N) à partir d'une plaque de verre (G) au moyen d'étapes d'usinage, qui comprennent la coupe, la rupture et le meulage, la forme de l'au moins une pièce utile étant définie par un contour (K), l'installation comprenant :
• un dispositif de coupe avec au moins un outil de coupe (30) pour couper la plaque de verre,
• un dispositif de rupture avec au moins un outil de rupture (40) pour séparer la pièce utile,
• un dispositif de meulage (50) avec au moins un outil de meulage (60) pour meuler le bord de la pièce utile,
dans lequel l'outil respectif (30, 40, 60) et la plaque de verre ou la pièce utile sont disposés de manière mobile l'un par rapport à l'autre,
• un dispositif de mesure (129-133, 135-137, 150-154, 160, 170-172, 180) pour générer des signaux de mesure, lesquels
comprennent une première grandeur de mesure et au moins l'une d'une deuxième, d'une troisième, d'une quatrième et d'une cinquième grandeur de mesure, dans lequel
la première grandeur de mesure est détectable pendant l'exécution de l'une des étapes d'usinage en fonction de la position relative de l'outil agissant dans ladite étape d'usinage par rapport au contour et ladite première grandeur de mesure définit un premier paramètre d'usinage d'au moins un premier composant (30, 40, 60) du dispositif agissant dans ladite étape d'usinage et/ou de la plaque de verre et/ou de la pièce utile,
la deuxième grandeur de mesure est détectable pendant l'exécution d'une autre étape d'usinage en fonction de la position relative de l'outil agissant dans ladite autre étape d'usinage par rapport au contour et ladite deuxième grandeur de mesure définit un deuxième paramètre d'usinage d'au moins un deuxième composant (30, 40, 60) du dispositif agissant dans ladite autre étape d'usinage et/ou de la plaque de verre et/ou de la pièce utile,
la troisième grandeur de mesure est détectable pendant l'exécution de l'étape d'usinage dans laquelle la première grandeur de mesure peut être détectée en fonction de la position relative de l'outil agissant dans ladite étape d'usinage par rapport au contour et ladite troisième grandeur de mesure définit un troisième paramètre d'usinage d'au moins un troisième composant (30, 40, 60) du dispositif agissant dans ladite étape d'usinage et/ou de la plaque de verre et/ou de la pièce utile,
la quatrième grandeur de mesure spécifie un paramètre d'usinage d'au moins un quatrième composant (30, 40, 60) du dispositif pendant l'exécution de l'étape d'usinage dans laquelle la première ou la deuxième grandeur de mesure est détectable, ledit quatrième composant agissant dans ladite étape d'usinage et étant de préférence le premier ou le deuxième composant du dispositif, et
la cinquième grandeur de mesure est détectable en dehors d'une étape d'usinage, ladite cinquième grandeur de mesure définissant un paramètre d'état d'au moins une partie de la plaque de verre,
• et un dispositif de commande (100-103) pour commander le dispositif de coupe, le dispositif de rupture et le dispositif de meulage, avec lequel dispositif de commande les signaux de mesure peuvent être reçus pour former des données de mesure à partir des grandeurs de mesure, dans lequel le dispositif de commande est configuré pour former des signaux de correction sur la base des données de mesure, avec lesquels signaux de correction au moins l'un des dispositifs peut être commandé de manière adaptée lors de l'usinage de la plaque de verre et/ou de la pièce utile et/ou lors de l'usinage d'une plaque de verre et/ou d'une pièce utile suivante.

2. Installation selon la revendication 1, dans laquelle le dispositif de mesure (129-133, 135-137, 150-154, 160, 170-172, 180) présente au moins l'une des caractéristiques suivantes A1)-A9) :
A1) le dispositif de mesure est configuré de telle sorte que la cinquième grandeur de mesure peut être détectée le long d'au moins une partie du bord de la pièce utile (N) après la rupture et/ou le meulage,
A2) le dispositif de mesure est configuré de telle sorte que des signaux de mesure peuvent être générés sur la base de la mesure d'une force ; d'une trajectoire, en particulier d'une erreur de contour dans un axe de déplacement d'un dispositif ; d'une vitesse ; d'une accélération, en particulier d'une vibration ; d'un besoin en énergie, en particulier d'un courant d'un entraînement ; d'une température ; d'une mesure acoustique ; d'une mesure optique, en particulier d'une mesure optique pour générer des signaux, lesquels signaux peuvent être générés au moyen d'une réflexion sur la pièce utile et/ou d'une modulation d'un faisceau lumineux et/ou d'une détection de l'intensité lumineuse ; d'une mesure capacitive ; d'une mesure inductive ; d'une mesure d'un champ magnétique ; et/ou d'une mesure tactile,
A3) le dispositif de mesure comprend au moins une unité de photocapteur, en particulier une caméra (130, 136, 152, 152a-152d) pour capturer au moins une partie de la plaque de verre (G) ; le dispositif de commande est de préférence équipé d'un algorithme de traitement d'image, qui est configuré pour traiter des images fournies par la caméra,
A4) le dispositif de mesure est configuré de telle sorte que le dispositif de commande (100-103) peut générer des données de mesure pour la première, la deuxième, la troisième et/ou la quatrième grandeur de mesure à partir des signaux de mesure reçus, lesquelles données de mesure présentent une résolution temporelle d'au moins 10 Hz et, de préférence croissante, d'au moins 100 Hz, d'au moins 1000 Hz et d'au moins 10 kHz,
A5) le dispositif de mesure est configuré de telle sorte que les signaux de mesure comprennent au moins deux et de préférence trois de la deuxième, de la troisième, de la quatrième et de la cinquième grandeur de mesure,
A6) le dispositif de mesure est configuré de telle sorte que les signaux de mesure comprennent la première, la deuxième et la cinquième grandeur de mesure et une sixième grandeur de mesure, dans lequel la sixième grandeur de mesure peut être détectée pendant une autre étape d'usinage que lorsque la première et la deuxième grandeur de mesure ont été détectées ou en dehors d'une autre étape d'usinage que lorsque la cinquième grandeur de mesure est détectable,
A7) le dispositif de mesure comprend au moins un capteur pour mesurer les conditions ambiantes de l'installation, en particulier la température ambiante, l'humidité ambiante et/ou l'intensité lumineuse, pour générer des signaux de mesure contenant une autre grandeur de mesure, lesquels signaux de mesure peuvent être fournis au dispositif de commande,
A8) les signaux de mesure qui peuvent être générés par le dispositif de mesure comprennent une grandeur de mesure qui est la cinquième grandeur de mesure ou une autre grandeur de mesure et qui définit un paramètre d'état de la partie brisée de la plaque de verre (G),
A9) le dispositif de mesure est configuré de telle sorte que le dispositif de commande (100-103) peut générer des données de mesure pour la première, la deuxième, la troisième, la quatrième et/ou la cinquième grandeur de mesure à partir des signaux de mesure reçus, lesquelles données de mesure présentent une résolution spatiale d'au moins 10 cm, de préférence d'au moins 1 cm et de manière particulièrement préférée d'au moins 1 mm.

3. Installation selon l'une quelconque des revendications précédentes, dans laquelle le dispositif de commande (100-103) présente au moins l'une des caractéristiques suivantes B1)-B5) :
B1) le dispositif de commande est équipé d'un algorithme basé sur l'intelligence artificielle, en particulier un algorithme pour l'apprentissage automatique et/ou pour la reconnaissance de motif, dans lequel les signaux de correction peuvent être générés au moyen de l'algorithme,
B2) le dispositif de commande est configuré pour évaluer les données de mesure lors de la détermination du plan de coupe et/ou du plan de rupture d'une plaque de verre (G) à usiner ensuite, en particulier lors de la détermination d'au moins une ligne de coupe auxiliaire (H),
B3) le dispositif de commande est configuré pour générer des signaux de correction pendant l'étape d'usinage dans laquelle la première et la troisième grandeur de mesure peuvent être détectées, lesquels signaux de correction conduisent à une modification de la première et/ou de la troisième grandeur de mesure pour ajuster dynamiquement l'étape d'usinage,
B4) le dispositif de commande est configuré pour générer des signaux de correction pendant l'étape d'usinage dans laquelle la première ou la deuxième grandeur de mesure peuvent être détectées, lesquels signaux de correction conduisent à une modification de la première et/ou de la quatrième grandeur de mesure ou de la deuxième et/ou de la quatrième grandeur de mesure pour ajuster dynamiquement l'étape d'usinage,
B5) le dispositif de commande est configuré pour générer les signaux de correction en incluant des données de mesure qui sont basées sur au moins l'une des grandeurs de mesure et qui ont été formées lors de la fabrication antérieure de pièces utiles.

4. Installation selon l'une quelconque des revendications précédentes, laquelle installation comprend une mémoire de données interne et/ou une interface pour l'échange de données avec une mémoire de données externe, en particulier par le biais d'un réseau, dans laquelle au moins une partie des données de mesure peut être stockée dans la mémoire de données interne et/ou externe, de sorte qu'elle peut être prise en compte lors de la détermination des signaux de correction pour des plaques de verre (G) usinées ensuite.

5. Installation selon l'une quelconque des revendications précédentes, dans laquelle les signaux de mesure qui peuvent être générés par le dispositif de mesure (129-133, 135-137, 150-154, 160, 170-172, 180) comprennent au moins une grandeur d'état de mesure qui définit un paramètre d'état d'au moins un composant de l'installation, en particulier l'un des outils (30, 40, 60), après une étape d'usinage, dans laquelle le dispositif de commande (100-103) est configuré pour prendre en compte la grandeur d'état de mesure lors de la formation des signaux de correction et/ou pour générer un signal d'avertissement lorsque la grandeur d'état de mesure atteint une valeur seuil.

6. Installation selon l'une quelconque des revendications précédentes, comprenant un dispositif d'usinage pour façonner et/ou affûter l'au moins un outil de meulage (60), dans laquelle le dispositif de commande (100-103) est configuré pour activer le dispositif d'usinage en fonction d'au moins l'une des grandeurs de mesure et/ou de l'au moins une grandeur d'état de mesure ; l'activation est de préférence telle que le dispositif d'usinage spécifie la fréquence et/ou la durée de l'opération d'affûtage avec une pierre d'affûtage pour l'usinage de l'outil de meulage et/ou la puissance de la pierre d'affûtage et/ou l'outil de meulage est de préférence usiné en fonction de la forme d'un bord de la pierre d'affûtage.

7. Installation selon l'une quelconque des revendications précédentes, dans laquelle les signaux de mesure qui peuvent être générés par le dispositif de mesure (129-133, 135-137, 150-154, 160, 170-172, 180) comprennent une grandeur de mesure
qui est la première, la deuxième, la troisième, la quatrième ou une autre grandeur de mesure
et qui est associée à l'étape d'usinage de la coupe et qui définit un paramètre d'usinage qui comprend au moins l'un des éléments suivants :
• la force avec laquelle l'outil de coupe (30) agit sur la plaque de verre (G),
• la vitesse à laquelle l'outil de coupe peut être déplacé le long de la plaque de verre,
• le son généré par la plaque de verre pendant la coupe,
• la vibration avec laquelle la plaque de verre et/ou l'outil de coupe vibre pendant la coupe,
• l'épaisseur de la plaque de verre,
• la quantité d'huile de coupe qui peut être appliquée sur la ligne de coupe,
• les contraintes mécaniques dans la plaque de verre,
• la profondeur et/ou la largeur de la ligne de coupe,
• le nombre et/ou la quantité de fragments de verre le long de la ligne de coupe,
• la puissance d'au moins un entraînement pour déplacer l'outil de coupe,
• les positions auxquelles l'outil de coupe entre en contact avec la plaque de verre,
• la température de la pièce utile,
• la transparence de la pièce utile,
• la position réelle d'un axe de déplacement du dispositif de coupe, en particulier la position réelle le long d'au moins un axe linéaire et/ou autour d'un axe de rotation et/ou l'angle de basculement réel d'une roue de coupe basculante de l'au moins un outil de coupe par rapport à l'axe vertical,
• la position cible d'un axe de déplacement du dispositif de coupe, en particulier la position cible le long d'au moins un axe linéaire et/ou autour d'un axe de rotation et/ou l'angle de basculement cible d'une roue de coupe basculante de l'au moins un outil de coupe par rapport à l'axe vertical,
• l'erreur de contour dans un axe de déplacement du dispositif de coupe.

8. Installation selon l'une quelconque des revendications précédentes, dans laquelle les signaux de mesure qui peuvent être générés par le dispositif de mesure (129-133, 135-137, 150-154, 160, 170-172, 180) comprennent une grandeur de mesure
qui est la première, la deuxième, la troisième, la quatrième ou une autre grandeur de mesure et
qui est associée à l'étape d'usinage de la rupture et qui définit un paramètre d'usinage qui comprend au moins l'un des éléments suivants :
• la force avec laquelle l'outil de rupture (40) agit sur la plaque de verre (G),
• les positions auxquelles l'outil de rupture entre en contact avec la plaque de verre,
• la vitesse à laquelle l'outil de rupture peut être déplacé le long de la plaque de verre,
• le son généré par la plaque de verre pendant la rupture,
• la vibration avec laquelle la plaque de verre et/ou l'outil de rupture vibre pendant la rupture,
• la forme et/ou le profil géométrique et/ou le profil temporel du bord qui se forme pendant la rupture,
• l'épaisseur de la plaque de verre,
• les contraintes mécaniques dans la plaque de verre,
• la température de la plaque de verre,
• l'intensité et/ou la longueur d'onde d'un outil de rupture sous la forme de lumière.

9. Installation selon l'une quelconque des revendications précédentes, dans laquelle les signaux de mesure qui peuvent être générés par le dispositif de mesure (129-133, 135-137, 150-154, 160, 170-172, 180) comprennent une grandeur de mesure
qui est la première, la deuxième, la troisième, la quatrième ou une autre grandeur de mesure
et qui est associée à l'étape d'usinage du meulage et qui définit un paramètre d'usinage qui comprend au moins l'un des éléments suivants :
• la force avec laquelle l'outil de meulage (60) agit sur la partie utile (N),
• la force avec laquelle la partie utile agit sur le support sur lequel la partie utile repose pendant le meulage,
• le son généré par la partie utile pendant le meulage,
• la vibration avec laquelle la partie utile et/ou l'outil de meulage vibre pendant le meulage,
• l'énergie pour déplacer l'outil de meulage, en particulier la puissance d'un entraînement,
• la température de la partie utile, de l'outil de meulage et/ou du réfrigérant pour l'outil de meulage,
• la forme, la rugosité, la translucidité et/ou la couleur du bord de la partie utile,
• la position réelle d'un axe de déplacement du dispositif de meulage,
• la position cible d'un axe de déplacement du dispositif de meulage,
• l'erreur de contour dans un axe de déplacement du dispositif de meulage,
• la lumière, en particulier l'intensité et/ou la longueur d'onde, qui apparaît pendant l'opération de meulage,
• la quantité de particules abrasées dans le réfrigérant qui peut être enlevée de l'outil de meulage,
• la propriété du réfrigérant qui est fourni à et/ou enlevé de l'outil de meulage,
• la détection de l'état d'un indicateur de température dans le réfrigérant, dans lequel la détection est de préférence telle que l'état de l'indicateur de température change à partir d'une température prédéterminée,
• les propriétés de l'outil de meulage (60), en particulier sa forme et/ou son diamètre.

10. Installation selon l'une quelconque des revendications précédentes, dans laquelle les signaux de mesure qui peuvent être générés par le dispositif de mesure (129-133, 135-137, 150-154, 160, 170-172, 180) comprennent une grandeur de mesure
qui est la cinquième grandeur de mesure ou une autre grandeur de mesure et qui définit au moins l'un des paramètres d'état suivants de la plaque de verre (G) ou de la partie utile (N) :
• les dimensions de la plaque de verre ou de la partie utile,
• l'épaisseur de la plaque de verre ou de la partie utile,
• le poids de la plaque de verre ou de la partie utile,
• la position de la plaque de verre ou de la partie utile par rapport à un système de coordonnées donné,
• la forme dans la direction de la profondeur et/ou le tracé d'au moins une ligne de coupe sur la plaque de verre,
• la position d'au moins une ligne de coupe auxiliaire (H) sur la plaque de verre,
• les contraintes mécaniques de la plaque de verre,
• les traces d'huile de coupe sur la plaque de verre coupée,
• la forme du bord (E) de la partie utile qui a été rompue, en particulier les fractures conchoïdales à la transition vers le côté supérieur et/ou le côté inférieur de la partie utile,
• la forme du bord (E') de la partie utile meulée,
• la rugosité, la translucidité et/ou la couleur du bord meulé.

11. Installation selon l'une quelconque des revendications précédentes, qui comprend au moins l'une des caractéristiques suivantes C1)-C11) :
C1) l'outil de coupe comprend une roue de coupe (30), de préférence la roue de coupe (30) est basculante par rapport à l'axe vertical,
C2) l'outil de coupe peut être déplacé dans au moins deux axes (X, Y), de préférence dans trois axes (X, Y, Z),
C3) l'outil de coupe peut être tourné autour d'un axe,
C4) l'outil de rupture comprend au moins un corps de rupture (40) qui peut être déplacé dans au moins deux axes (X, Y), de préférence dans trois axes (X, Y, Z) ; l'au moins un corps de rupture peut également être pivoté de préférence autour d'au moins un axe,
C5) l'outil de rupture comprend au moins deux corps de rupture, un corps de rupture pouvant être déplacé le long du côté avant de la plaque de verre (G) et l'autre corps de rupture pouvant être déplacé le long du côté arrière de la plaque de verre,
C6) l'outil de meulage comprend au moins une roue de meulage (60),
C7) l'outil de meulage peut être déplacé dans au moins un axe (Y), de préférence dans au moins deux axes (Y, Z), de manière particulièrement préférée dans au moins trois axes (X, Y, Z),
C8) le dispositif de meulage comprend un support (52) sur lequel la partie utile (N) repose pendant le meulage et qui peut être tourné autour d'un axe,
C9) le dispositif de coupe comprend un laser pour générer un faisceau laser en tant qu'outil de coupe,
C10) le dispositif de rupture comprend un dispositif pour chauffer et/ou refroidir la plaque de verre ; au moins une structure pouvant de préférence être générée au moyen du dispositif en tant qu'outil de rupture, laquelle structure est liquide, gazeuse et/ou sous la forme de lumière,
C11) l'outil de coupe et l'outil de rupture sont couplés au même entraînement (35), l'actionnement de l'entraînement provoquant un déplacement soit de l'outil de coupe soit de l'outil de rupture vers la plaque de verre.

12. Installation selon l'une quelconque des revendications précédentes, comprenant en outre un dispositif de forage (70) ayant au moins un outil de forage (71) pour forer la pièce utile (N) en tant qu'étape d'usinage supplémentaire, dans laquelle les signaux de mesure qui peuvent être générés par le dispositif de mesure (129-133, 135-137, 150-154, 160, 170-172, 180) comprennent de préférence une première grandeur de mesure supplémentaire qui peut être détectée pendant le forage et qui définit un paramètre d'usinage supplémentaire d'au moins un composant (71) du dispositif de forage et/ou de la pièce utile, et/ou une deuxième grandeur de mesure supplémentaire qui définit un paramètre d'état de la pièce utile après le forage.

13. Installation selon la revendication 12, comprenant un dispositif d'usinage pour affûter l'au moins un outil de forage (71), dans laquelle le dispositif de commande (100-103) est configuré pour activer le dispositif d'usinage en fonction d'au moins l'une des grandeurs de mesure, d'au moins l'une des grandeurs de mesure supplémentaires et/ou de l'au moins une grandeur d'état de mesure ; l'activation est de préférence telle que le dispositif d'usinage spécifie la fréquence et/ou la durée de l'opération d'affûtage avec une pierre d'affûtage pour l'usinage de l'outil de forage et/ou la puissance de la pierre d'affûtage et/ou l'outil de forage est de préférence usiné en fonction de la forme d'un bord de la pierre d'affûtage.

14. Procédé de fabrication d'au moins une pièce utile (N) à partir d'une plaque de verre (G) au moyen d'étapes d'usinage, qui comprennent la coupe, la rupture et le meulage, la forme de l'au moins une pièce utile étant définie par un contour (K), dans lequel
un dispositif de coupe coupe la plaque de verre en déplaçant au moins un outil de coupe (30) et la plaque de verre l'un par rapport à l'autre,
un dispositif de rupture sépare la pièce utile en déplaçant au moins un outil de rupture (40) et la plaque de verre l'un par rapport à l'autre, et
un dispositif de meulage (50) meule un bord de la pièce utile en déplaçant au moins un outil de meulage (60) et la pièce utile l'un par rapport à l'autre, dans lequel
des signaux de mesure sont générés au moyen d'un dispositif de mesure (129-133, 135-137, 150-154, 160, 170-172, 180), lesquels signaux de mesure comprennent une première grandeur de mesure et au moins l'une d'une deuxième, d'une troisième, d'une quatrième et d'une cinquième grandeur de mesure, dans lequel
la première grandeur de mesure est détectée pendant l'exécution de l'une des étapes d'usinage en fonction de la position relative de l'outil agissant dans ladite étape d'usinage par rapport au contour et définit un premier paramètre d'usinage d'au moins un premier composant (30, 40, 60) du dispositif agissant dans ladite étape d'usinage et/ou de la plaque de verre et/ou de la pièce utile,
la deuxième grandeur de mesure est détectée pendant l'exécution d'une autre étape d'usinage en fonction de la position relative de l'outil agissant dans ladite étape d'usinage par rapport au contour et définit un deuxième paramètre d'usinage d'au moins un deuxième composant (30, 40, 60) du dispositif agissant dans ladite autre étape d'usinage et/ou de la plaque de verre et/ou de la pièce utile,
la troisième grandeur de mesure est détectée pendant l'exécution de l'étape d'usinage dans laquelle la première grandeur de mesure est détectée en fonction de la position relative de l'outil agissant dans ladite étape d'usinage par rapport au contour et définit un troisième paramètre d'usinage d'au moins un troisième composant (30, 40, 60) du dispositif agissant dans ladite étape d'usinage et/ou de la plaque de verre et/ou de la pièce utile,
la quatrième grandeur de mesure spécifie un paramètre d'usinage d'au moins un quatrième composant (30, 40, 60) du dispositif pendant l'exécution de l'étape d'usinage dans laquelle la première ou la deuxième grandeur de mesure est détectée, ledit quatrième composant agissant dans ladite étape d'usinage et étant de préférence le premier ou le deuxième composant du dispositif, et
la cinquième grandeur de mesure est détectée en dehors d'une étape d'usinage et définit un paramètre d'état d'au moins une partie de la plaque de verre,
et dans lequel un dispositif de commande (100-103) pour commander le dispositif de coupe, le dispositif de rupture et le dispositif de meulage reçoit les signaux de mesure et forme des données de mesure à partir des grandeurs de mesure, sur la base desquelles données de mesure le dispositif de commande forme des signaux de correction avec lesquels au moins l'un des dispositifs est commandé de manière adaptée lors de l'usinage de la plaque de verre et/ou de la pièce utile et/ou lors de l'usinage d'une plaque de verre et/ou d'une pièce utile suivante.

15. Procédé selon la revendication 14, qui comprend au moins l'une des étapes suivantes S1 à S3 :
S1) le dispositif de commande (100-103) commande, sur la base des données de mesure, l'au moins un outil de meulage (60) de sorte que celui-ci reste tranchant ou présente au moins une perte de tranchant réduite lors du meulage du bord de l'au moins une pièce utile (N), de préférence le dispositif de commande (100-103) commande, sur la base des données de mesure, la vitesse de rotation, la vitesse d'avance et/ou la profondeur de coupe de meulage de l'au moins un outil de meulage (60) pour maintenir l'outil de meulage (60) tranchant ou provoquer au moins une perte de tranchant réduite,
S2) la coupe et la rupture de la plaque de verre (G) sont effectuées de sorte que la pièce utile séparée de la plaque de verre comprend au moins une partie supplémentaire utilisée pour trancher l'outil de meulage,
S3) l'au moins une pièce utile (N) est forée par au moins un outil de forage (71) d'un dispositif de forage (70), dans lequel le dispositif de commande (100-103) commande, sur la base des données de mesure, l'au moins un outil de forage (71) de sorte que celui-ci reste tranchant ou présente au moins une perte de tranchant réduite lors du forage de l'au moins une pièce utile (N), en particulier le dispositif de commande (100-103) commande, sur la base des données de mesure, la vitesse de rotation et/ou la vitesse d'avance de l'au moins un outil de forage (70) pour maintenir l'au moins un outil de forage (70) tranchant ou provoquer au moins une perte de tranchant réduite.

16. Procédé selon la revendication 14 ou 15, qui est réalisé sur une installation selon l'une quelconque des revendications 1 à 13.
